Europäisches Patentamt

European Patent Office

Office européen des brevets

(11) Publication number: **0 146 283**
**B1**

(12) **EUROPEAN PATENT SPECIFICATION**

(45) Date of publication of patent specification: **11.01.89**

(51) Int. Cl.⁴: **F 15 B 7/00, F 16 D 25/14, F 16 L 37/08, F 16 L 37/28**

(21) Application number: **84308183.7**

(22) Date of filing: **26.11.84**

(54) Improvements in or relating to prefilled hydraulic control apparatus.

(30) Priority: **30.04.84 US 607020**
**28.11.83 US 555667**

(43) Date of publication of application:
**26.06.85 Bulletin 85/26**

(45) Publication of the grant of the patent:
**11.01.89 Bulletin 89/02**

(84) Designated Contracting States:
**BE DE FR GB IT SE**

(56) References cited:
**EP-A-0 130 820**
**FR-A-2 048 419**
**GB-A-1 343 903**
**GB-A-1 346 974**
**GB-A-1 539 879**
**GB-A-2 021 226**
**GB-A-2 091 362**
**US-A-2 453 741**
**US-A-2 511 765**
**US-A-2 819 914**
**US-A-4 122 678**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Leigh Monstevens, Keith Vernon**
**5622 Larkins**
**Troy Michigan 48098 (US)**
Inventor: **Compton, David John**
**1918 Axtel**
**Troy Michigan 48084 (US)**
Inventor: **Nix, Richard Andrew**
**45482 Hecker**
**Utica Michigan 48087 (US)**

(74) Representative: **Adkins, Michael et al**
**Withers & Rogers 4 Dyer's Buildings**
**Holborn London, EC1N 2JT (GB)**

Courier Press, Leamington Spa, England.

**Description**

The present invention relates to hydraulic control apparatus comprising a slave cylinder for operating a device such as the clutch release mechanism of a motor vehicle installed remotely from a master cylinder, the hydraulic control mechanism being prefilled with hydraulic fluid prior to installation in a motor vehicle or other machine.

It is known to prefill with hydraulic fluid a motor vehicle clutch control apparatus, comprising a master cylinder, a reservoir of fluid, and a slave cylinder for operating the release or throwout bearing (herein called a throwout bearing) of a mechanical diaphragm spring clutch, as disclosed in GB—A—1,539,879 and GB—A—2,091,362.

Prefilling with hydraulic fluid and pretesting hydraulic apparatus for operating motor vehicle mechanical clutches present the many advantages, for the motor vehicle manufacturer, of receiving a fully assembled mechanism comprising all the components filled with hydraulic fluid and pretested for proper operation, ready to install on a motor vehicle on the assembly line, without requiring that the components be installed separately, connected by way of a flexible conduit, and filled after installation with hydraulic fluid while being purged of any air contained in the apparatus.

In apparatus wherein the slave cylinder, for actuating the clutch release mechanism, takes the form of a conventional cylindrical cylinder-piston assembly with the piston rod projecting from the cylinder housing attached at its end to the clutch release lever, the slave cylinder being attached at some portion of the clutch bell housing, permanent connection of the master cylinder to the slave cylinder by means of a flexible conduit, and prefill of the apparatus with hydraulic fluid to not present much inconveniences, whether the slave cylinder or the master cylinder is installed first on the vehicle, and the other cylinder installed at some other subsequent station on the assembly line. The last installed component may be simply left dangling on the end of the flexible conduit, or may be attached by means of straps, wires or strings to some portion of the motor vehicle frame or body, until definitely mounted in its operative position. However, with the present trend towards utilizing annular slave cylinders, disposed concentric to the driveshaft and bolted either to the face of the transmission or gearbox casing or, in the alternative, mounted on a side of or made integral with the clutch bell housing, such that the annular piston within the concentric annular slave cylinder may operate the clutch throwout bearing, it is difficult to provide a fully assembled, fully tested, prefilled apparatus, without some accompanying inconveniences. Such inconveniences relate to the requirement that the annular slave cylinder be installed first in the clutch bell housing, or on the transmission casing face, and the master cylinder on the end of the flexible line or conduit interconnecting the master and slave cylinders be provisionally attached, in some manner by strings, wires or straps to the motor vehicle frame, and subsequently installed in its proper position through the passenger compartment floorboard or bulkhead.

According to one aspect of the present invention there is provided a method of prefilling a hydraulic control apparatus prior to installation of said apparatus on a vehicle or machine, said apparatus when installed comprising a hydraulic master cylinder a remote hydraulic slave cylinder and a conduit connecting the master cylinder to the slave cylinder, characterised by providing a connector through which hydraulic fluid can pass, the connector being of a leakproof quick-connect type and comprising a pair of half-connector members each including valve arrangements which valve arrangements are both closed when the half-connector members are uncoupled and are both open when the half connectors are coupled to enable the cylinders to be interconnected through the conduit, and filling the cylinders and conduit with hydraulic fluid prior to installation on the vehicle or machine to provide separate modular units prefilled with said hydraulic fluid for installation on the vehicle or machine with the half-connector members uncoupled whereby the installed modular units can subsequently be interconnected by coupling together the half connector members of the connector to form the hydraulic control apparatus.

According to another aspect of the invention there is provided a method of installing a hydraulic control apparatus on a vehicle or machine, said apparatus, when installed, comprising a hydraulic master cylinder, a remote hydraulic slave cylinder and a conduit connecting the master cylinder to the slave cylinder, characterised by providing a connector through which hydraulic fluid can pass, the connector being of a leakproof quick-connect type and comprising a pair of half-connector members each including valve arrangements which valve arrangements are both closed when the half-connector members are uncoupled and are both open when the half connectors are coupled to enable the cylinders to be interconnected through the conduit, and filling the cylinders and conduit with hydraulic fluid prior to installation on the vehicle to provide separate modular units prefilled with said hydraulic fluid, installing the separate modular units on the vehicle or machine with the half-connector members of the connector uncoupled and interconnecting the installed modular units by coupling together the half connector members of the connector to form the hydraulic control apparatus.

The method permits the master cylinder, slave cylinder, conduit and half-connector members to be arranged in various ways. In one example, one of the half-connector members may be arranged on the master cylinder and the other on one end of the conduit, the opposite end of the conduit being connected to the slave cylinder, or vice versa. In another example, the connector may be arranged at some intermediary position between the ends of the conduit with the respective ends of the conduit remote from the connector being connected to the master and slave cylinders. In yet another example, one of the half-connector members of one connector may be mounted at one end of the conduit and the other of its half-connector members on the master cylinder, and one of the half-connector members of another connector may be mounted at the other end of the conduit and the other of its half-connector members on the slave cylinder.

The method also permits various methods of filling with hydraulic fluid to be effected. For example the method may include filling one of the cylinders with hydraulic fluid through the half-connector member thereon to form a filled modular unit, and filling the other cylinder and the conduit through the other half-connector member at one end of the conduit, the other end of the conduit being connected to the other cylinder to form a second filled modular unit. In another example the method may include filling with hydraulic fluid the master cylinder and part of the conduit connected thereto through the half-connector member on said conduit parts, and filling with hydraulic fluid the slave cylinder and part of the conduit part to form two filled modular units. In a further example the method may include filling the conduit through a said one half-connector member of the connectors thereon to form a filled modular unit, and filling the respective master cylinder and slave cylinder through said other half-connector members of the connectors thereon to form two further filled modular units. The method may include evacuating atmospheric air from the apparatus or modular units prior to connecting the apparatus or modular units to a source of hydraulic fluid for filling.

In hydraulic control apparatus filled by a method as set out in any of the four immediately preceding paragraphs the half-connector members may be provided with one way locking means which inhibits disconnection of said half-connector members after they have been interconnected. However, a tool may be provided for releasing the locking means to enable the half-connector members to be disconnected. In one embodiment, the locking means may comprise a ring-like member on one half-connector member having sprag elements formed thereon which are engageable with a surface on the other half-connector member.

The slave cylinder may include two tubular portions both of which are integral with a bell housing of a friction clutch assembly or one only of which is integral with the bell housing. In the latter case, the other portion may be bolted or otherwise secured to the bell housing. Alternatively, the slave cylinder may extend from a transmission casing into the bell housing.

Connectors of the leakproof quick-connect type are known from US—A—2,511,765 and US—A—2,819,914.

The invention will now be described by way of example with reference to the accompanying drawings in which:—

Fig. 1 is a schematic representation of a clutch hydraulic control apparatus in accordance with the present invention;

Figs. 2 to 4 are views generally similar to Fig. 1 but showing modifications thereof;

Fig. 5 is a longitudinal section along line 5—5 in Fig. 3 showing a leakproof quick-connect fitting or connector;

Fig. 6 is a view similar to Fig. 5 but showing two separate halves of the leakproof quick-connect fitting or connector forming part of the present invention, prior to coupling;

Fig. 7 is a transverse section along line 7—7 in Fig. 6;

Fig. 8 is a partial section along line 8—8 in Fig. 1;

Fig. 9 is diagrammatic view illustrating the manner in which a portion of the hydraulic control apparatus of the invention is prefilled with hydraulic fluid;

Fig. 10 is a view similar to Fig. 9, but showing a modification thereof;

Fig. 11 is a cross section through part of a leakproxf quick-connect fitting or connector in accordance with the present invention which facilitates disconnection of the male and female members of the fitting by means of a tool;

Fig. 12 is a cross-section on line 12—12 in Fig. 11;

Fig. 13 is a cross-section along line 13—13 of Fig. 12;

Fig. 14 is longitudinal section through part of an hydraulic control apparatus of the type shown in Fig. 4 showing details of an alternative leakproof quick-connect fitting or connector and a slave-cylinder;

Fig. 15 is a view similar to Fig. 14 showing the separate halves of the leakproof quick-connect fitting prior to coupling but omitting details of the slave cylinder;

Fig. 16 is a cross-section along line 16—16 in Fig. 15;

Fig. 17 is a longitudinal section through another type of leakproof quick-connect fitting or connector;

Fig. 18 is cross-sectional view showing the separate halves of the fitting or connector of Fig. 17 prior to coupling;

Figs. 19—21 illustrate further examples of hydraulic control apparatus in accordance with the present invention;

Fig. 22 is a longitudinal section through a bell housing having an integral slave cylinder;

Figs. 23, 24 and 25 are views similar to Fig. 22 but utilising certain slave cylinder components non-integral with the bell housing; and

Figs. 26 and 27 are longitudinal cross-sections through part of a bell housing and transmission housing showing the slave cylinder extending from the transmission housing.

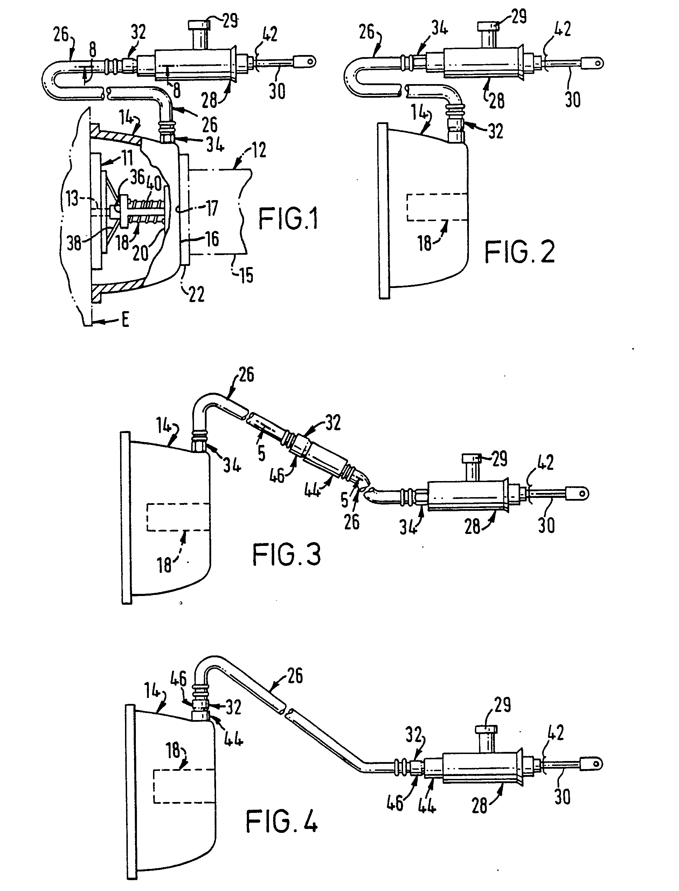

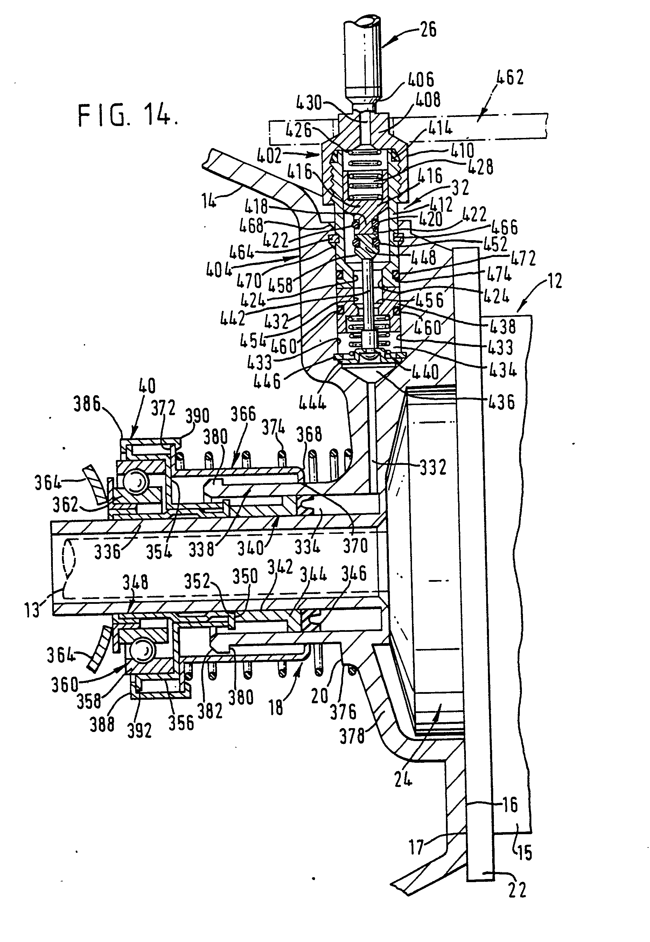

Referring to the drawings, and more particularly to Fig. 1, a motor vehicle transmission includes a friction clutch assembly 11 and a gear box 12 enclosed in a casing or housing 15. A driveshaft 13 drives the gear box 12 from the clutch assembly 11. A bell housing 14 surrounding the clutch assembly 11, is bolted on the rear face of the motor vehicle engine E. The rear face 16 of the bell housing 14 is bolted to the face 17 of the gear box casing 15. An annular hydraulic slave cylinder 18 is disposed around the driveshaft 13 within the bell housing 14. In the example of structure illustrated, the slave cylinder 18 has a one-piece housing 20 cast integral with the clutch bell housing 14. Such a slave cylinder is described in detail below in relation to Fig. 14. The face 17 of the gearbox casing 15 is on a flange 22; and an end plate, not shown, closing the end of the gearbox casing 15 is also bolted to the face 17 of the gearbox casing 15, the transmission input shaft 13, as shown in dashed lines, projecting through the end plate.

The slave cylinder 18 is connected via a line or conduit 26 to a master cylinder 28. The master cylinder 28 is provided with a built-in hydraulic fluid reservoir 29, in the example of structure illustrated, and has an input rod 30 pivotally connectable at an end to a clutch control pedal, not shown, installed within the driver compartment of a motor vehicle, not shown. The rod 30, as is well known, is connected to a piston, not shown, disposed in the master cylinder 28 for displacing the hydraulic fluid through the line 26 to the slave cylinder 18 when the clutch pedal is depressed. The line or conduit 26 is a flexible conduit or hose having a connector 34 for connection to the inlet of the slave cylinder 18, and has another connector 32 on the other end for connection to the outlet of the master cylinder 28.

The slave cylinder 18 is adapted to displace a throwout bearing 36 engaged with the end of the clutch release fingers 38, for releasing the clutch 11 when hydraulic fluid is introduced into the slave cylinder 18 from the master cylinder 28 through the conduit 26. After manufacturing and assembly of the hydraulic apparatus, and prior to filling the apparatus with hydraulic fluid, a restraining strap 40, e.g. of the type described in more detail with respect to Figs. 14—16, is installed for holding the throwout bearing 36 in a retracted position, during shipment of the hydraulic apparatus and installation of the integral subassembly of the slave cylinder 18 and bell housing 14 on a motor vehicle, in the example of structure illustrated. During filling with hydraulic fluid of the hydraulic apparatus, and during shipment and installation of the master cylinder 28 on a motor vehicle, the input rod 30 of the master cylinder is held in an extended position by means such as a clip 42, for example, as disclosed in more detail in our copending European Patent Application No. 84304481.9 (EP—A—0 130 820).

In the example of structure illustrated at Fig. 1, the fitting or connector 32, connecting an end of the conduit 26 to the master cylinder 28, is of a leakproof quick-connect type, while the fitting or connector 34 connecting the other end of the conduit 26, to the slave cylinder 18 is of the conventional type. In this manner, after the hydraulic apparatus has been filled with hydraulic fluid, the line or conduit 26 may be broken at the connector 32 without loss of hydraulic fluid or, in the alternative, and as hereinafter explained, the master cylinder 28 may be prefilled with hydraulic fluid as a separate first modular unit, while the slave cylinder 18 and the conduit 26 may be filled with hydraulic fluid as a separate second modular unit, the two separate modular units being reconnected after installation of the hydraulic aparatus on a motor vehicle.

In Fig. 2, the leakproof quick-connect connector 32 is used for connecting one end of the line 26 to the slave cylinder 18, while the other end of the conduit 26 connected to the master cylinder 28 is provided with a conventional connector 34. The hydraulic apparatus may thus be broken at the leakproof quick-connect connector 32, after filling and testing of the apparatus, or, in the alternative, the separate modular units consisting of the master cylinder 28 with the hose or conduit 26 attached thereto, and of the slave cylinder 18, contained with in the bell housing 14, may be separately prefilled and readily connected after installation of the units on a motor vehicle.

Fig. 3 illustrates a clutch hydraulic control apparatus according to the present invention wherein the conduit 26 is connected to the master cylinder 28 by way of a conventional connector 34 attached to an end of the conduit and the other end of the conduit 26 is connected to the slave cylinder 18 also by way of a conventional connector 34. At some point between the ends of the conduit 26, a leakproof quick-connect connector 32 is disposed such as to permit installing the master cylinder 28 on a motor vehicle with a portion of the conduit 26 attached thereto, and to permit installing the slave cylinder 18 on the motor vehicle already pre-installed in or made integral with the bell housing 14. The hydraulic apparatus may be prefilled with hydraulic fluid and pretested in the manufacturer's plant as a complete assembly, or it may be prefilled and pretested in separate modular sub-assemblies, one consisting of the slave cylinder 18 with a portion of the conduit 26 attached thereto, and the other consisting of the master cylinder 28 with the other portion of the conduit 26 attached thereto, and the connection between the ends of the portions of the conduit 26 each provided with one half of the leakproof quick-connect connector 32 is effected during assembly of the motor vehicle.

Fig. 4 illustrates an extreme arrangement for a hydraulic control apparatus according to the invention having practical applications especially in installations wherein the master cylinder 28 and the slave cylinder 18 are located at considerable distance from each other, such as for example in a rear-engine motor coach or the like, and the routing of the flexible conduit 26 through the frame or the body of the motor vehicle is more conveniently effected with the ends of the conduit 26 unattached to the master cylinder 28 and to the slave cylinder 18, respectively. The conduit 26 is provided with a leakproof quick-connect connector 32 at each end, and such an arrangement still permits bench filling of the apparatus with hydraulic fluid and testing of the apparatus prior to shipment to the motor vehicle manufacturer. The apparatus is subsequently broken in three separate components or modular units, already filled with hydraulic fluid, one being the master cylinder 28, the other the slave cylinder 18 and the third one the conduit 26. During assembly of the motor vehicle, the three separate components are interconnected without loss of fluid and without introduction of air in the system. Furthermore, if so desirable, the master cylinder 28, the slave cylinder 18 and the conduit 26 may be prefilled and pretested individually.

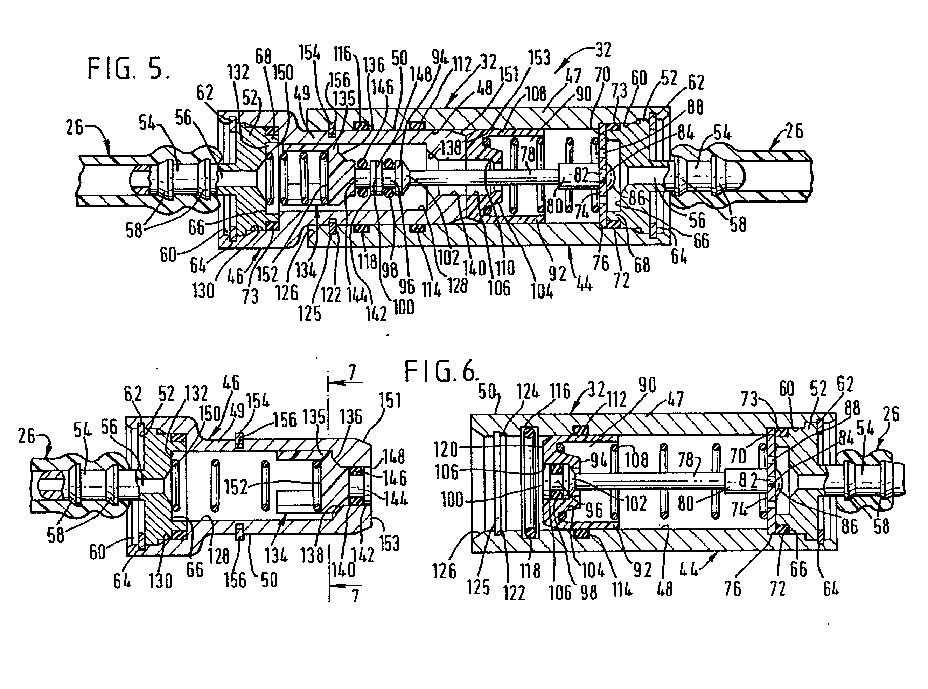

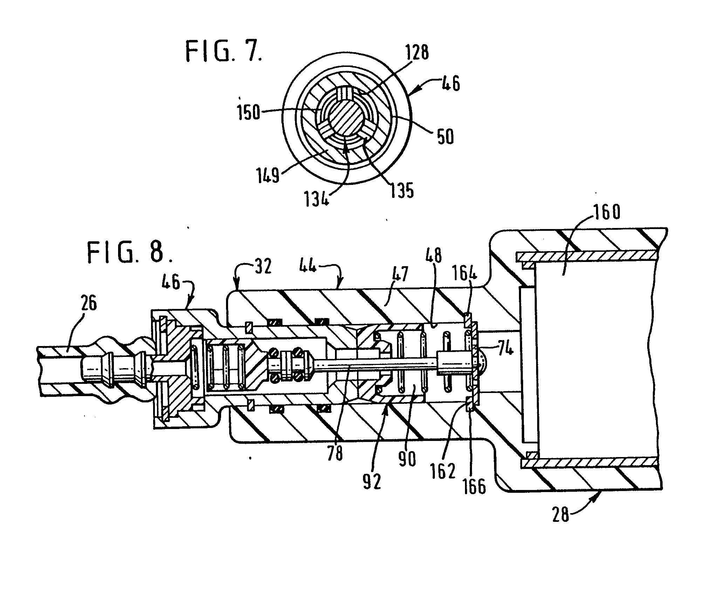

As illustrated in detail in Figs. 5 and 6, the leakproof quick-connect connector 32 of Fig. 3 consists of two complementary half-connectors or members 44 and 46, each formed of a tubular body 47 and 49, respectively. The half-connector 44 is of the female type and its tubular body 47 has a bore 48 capable of slidably accepting the cylindrical peripheral surface 50 of the tubular body 49 of the half-connector 46, which is of the male type. Fig. 5 illustrates the female and male members 44 and 46 coupled, as also shown at Fig. 3, while Fig. 6 illustrates the female member 44 and the male member 46 uncoupled prior to introducing the tubular body 49 of the male member 46 into the bore 48 of the female member 44, after installation of the master cylinder 28 and of the slave cylinder 18-clutch bell housing 14 sub-assembly in their respective locations on a motor vehicle.

The tubular body 47 of the female member 44 has an end cap 52 provided with an integral outwardly projecting fitting 54, a passageway 56 permitting fluid communication with the interior of the conduit 26 having its end fitted over the fitting 54, and being adequately clamped thereon or, as illustrated, being elastically held over by means of a pair of tapered annular ridges 58' projecting from the peripheral surface of the fitting 54. The end cap 52 fits in an enlarged diameter end portion 60 of the bore 48 and is held in assembly by means of a spring steel snap-ring 62 elastically expanded in a groove 64, interiorly formed proximate the end of the tubular housing 47. The interior end face 66 of the end cap 52 is recessed as a result of being provided with an integral projecting annular ridge or rim 68 forming an end annular abutment surface 70. The annular rim 68 has an outer peripheral surface spaced from the internal surface of the enlarged diameter portion 60 of the bore 48, such as to form an L-shaped groove 72 in which is disposed an elastomeric O-ring 73. A circular plate 74 of a diameter permitting fitting thereof within the enlarged diameter portion 60 of the bore 48 is engaged on one side with the annular abutment surface 70 of the end cap 52, and on its other side with an annular shoulder 76 formed at the junction between the bore 48 of the tubular body 47 and the enlarged diameter bore portion 60 in which is fitted the end cap 52, such as to fixedly hold the circular plate 74 in position as shown. The circular plate 74 supports a rod 78 at its enlarged foot portion 80 having a mounting step 82 passed through a central aperture 84 in the circular plate 74, the projecting end of the stem 82 being formed as a rivet head 86 for holding the rod 78 fixedly about the longitudinal axis of the bore 48. Apertures, such as shown at 88, are provided through the circular plate 74 such as to permit hydraulic fluid, to circulate to and fro between the passageway 56 and a chamber 90 defined in the bore 48 of the female member 44 below a generally cup-shaped spool valve 92 slidably disposed in the bore 48. The rod 78 has an enlarged head 94 provided with a groove 96 in which is disposed an elastomeric O-ring 98. The top of the enlarged head 94 forms a circular abutment surface 100 and the bottom of the enlarged head 94 forms a tapered abutment surface 102. The valve spool 92 has an internally directed boss 104 provided with a port defined by a bore 106 capable of accepting the rod enlarged head 94 when the spool valve 92 is displaced by a compressed coil spring 108, disposed between the circular plate 74 and the cup-shaped spool valve 92, urging the spool valve 92 to the position shown at Fig. 6, causing engagement of the tapered abutment face 102 with a corresponding tapered abutment end surface 110 at the end of the bore 106 within the valve spool boss 104.

It is immediately apparent that in the position of the spool valve 92 illustrated in Fig. 6, the enlarged head 94 of the rod 78 being engaged with in the port defined by the bore 106 in the spool valve boss 104, the elastomeric O-ring 98 in the groove 96 prevents leakage of fluid from the chamber 90 to the open end of the female member tubular body 47. An elastomeric O-ring 112, disposed in an annular groove 114 in the surface of the bore 48 prevents leakage of fluid past the peripheral surface of the spool valve 92, the elastomeric O-ring 73 preventing leakage of fluid past the end cap 52. The bore 48 in the female member tubular body 47 is further provided with an internal groove 116 in which is disposed an elastomeric O-ring 118, the groove 116 and the elastomeric O-ring 118, the groove 116 and the elastomeric O-ring 118 being located proximate the open end of the tubular body 47 beyond an annular end face 120 of the spool valve 92. A further annular groove 122 is formed proximate the end of the tubular body 47. The groove 122 has a tapered sidewall 124 and a radial sidewall 125, and the bore 48 gradually increases in diameter at the end of the tubular body 47, such as to form a funnel-shaped or tapered wall 126.

The tubular body 49 of the male member 46 has an internal bore 128 provided with an enlarged diameter end bore portion 130 in which is fitted an end cap 52 identical to the end cap 52 closing the end of the tubular body 47 of the female member 44. The fitting 54 of the male member end cap 52 is attached to the end of the corresponding length of conduit 26, and the passage-

way 56 through the fitting 54 and the end cap 52 allows transfer of hydraulic fluid to and fro between the conduit 26 and an internal chamber 132 defined in the bore 128 of the male member tubular body 49. Utilizing identical end caps 52 for the male member 46 and the female member 44 results in a considerable reduction in the number of different parts required.

A spider member 134 has three legs 135, (Fig. 7) which extend radially for sliding engagement with the surface of the internal bore 128 such as to provide lateral support for the spider member 134. The spider member 134 has a frontal abutment 136 engageable with an abutment annular surface 138 formed between the principal bore 128 within the tubular body 49 and a port in the form of a reduced diameter end bore portion 140. The spider member 134 supports, or is made integral with, a head or spool 142 of an outer diameter fitting the reduced diameter end bore 140, and provided with a groove 144 containing an elastomeric O-ring 146. The spool 142 has a flat abutment end face 148. A coil spring 150 disposed in compression between the annular recessed face 66 of the end cap 52 and a rear face 152 of the spider member 134 normally urges the spider member 134 and the spool 142 carried on the end thereof to the position shown at Fig. 6 wherein the spool 142 is engaged within the reduced diameter end bore 140 and the compressed O-ring 146 prevents transfer of fluid from the chamber 132 to the ambient, the abutments 136 of the spider member legs 135 in engagement with the tubular body shoulder abutment 138 limiting the forward travel of the spider member 134. The male member tubular body 49 is peripherally tapered, as shown at 151, to facilitate introduction of the male member tubular body 49 into the tapered end 126 of the bore 48 of the female member tubular body 47.

The male member tubular body 50 has an annular end face 153 which, during engagement of the male member 46 within the female member 44, engages the annular end face 120 of the cup-shaped spool valve 92 disposed within the bore 48 of the female member tubular body 47, progressively retracting the cup-shaped valve spool 92 from its position shown in Fig. 6 to the position shown in Fig. 5. During engagement of the male member 46 into the female member 44 the elastomeric O-ring 118 in the internal groove 116 in the bore 48 of the female member tubular body 47 engages the peripheral cylindrical surface 50 of the male member tubular member 49 such that when the annular end face 153 at the tip of the male tubular member 49 has retracted the valve spool 92 sufficiently as to cause the enlarged head 94 on the end of the rod 78 to be no longer disposed within the bore 106 in the valve spool 92, hydraulic fluid is allowed to circulate to and fro relative to the chamber 90 within the female member tubular body 42 and the chamber 132 within the end face 100 of the enlarged head 94 of the rod 78 engaging the end face 148 of the spool 142 on the end of the spider member 134 causing the spool 142 and the spider member 134 to be retracted within the bore 128, and thus disengaging the spool 142 from within the reduced diameter bore 140 against the bias of the spring 150, thus opening a direct fluid communication between the chambers 90 and 132. As the male member 46 is progressively pushed into the female member 44, and the spool valve 92 is progressively retracted, the elastomeric O-ring 112 in the internal groove 114 in the bore 48 of the female member tubular body 47 elastically encircles and engages the peripheral surface 50 of the male member tubular body 49, further ensuring, in co-operation with the elastomeric O-ring 118, that no fluid leaks to the ambient.

In the coupled position illustrated in Fig. 5, a resilient snap ring 154, disposed in a peripheral groove 156 formed in the peripheral cylindrical surface 50 of the male member tubular body 49 and which has been progressively contracted while being pushed against the converging tapered entrance surface 126 of the bore 48 in the female member tubular body 47, has been allowed to expand when reaching the internal groove 122 proximate the open end of the bore 48 in the female member tubular body 47. The tapered inner wall 124 of the groove 122 aids in locating the snap ring 154 relative to the groove 122. The snap ring 154 freely expands such as to be fully engaged within the groove 122 with the trailing face of the straight radial wall 125 of the groove 122, such that when the female member 44 and the male member 46 are coupled, as shown at Fig. 5, unauthorized separation of the two members is prevented.

For coupling the end of the conduit 26 to the master cylinder 28, Fig. 1, by means of the leakproof quick-connect connector 32, or for coupling the end of the conduit 26, it is preferable to attach the connector female member 44 to the respective cylinder or to form the female member integral with the cylinder. All that is required is to provide a bore for installation therein of the rod 78 and of the spool valve 92, the bore such as bore 48 being disposed in direct communication with the internal bore 160 of the master cylinder 28, as schematically illustrated at Fig. 8, or the internal bore 48 being part of the passageway leading into the fluid chamber of the slave cylinder.

Fig. 8 illustrates an example of structure for connecting the end of the conduit 26 provided with a connector male member 46 to a master cylinder 28, the tubular body 47 of the connector female member 44 being formed integral with the housing of the master cylinder 28 which, in the example of structure illustrated, is made of plastic. The bore 160 of the master cylinder 28 is placed in direct communication with the female member bore 48.

The perforated circular plate 74 abutting against an annular shoulder 162 and held in position by a spring steel snap ring 164 engaged in an internal groove 166. The remainder of the structure illustrated at Fig. 8 is exactly the same as the structure of the leakproof quick-connect connector 32 previously described with more particular detail in reference to the structure illustrated at Figs. 5—7.

Preferably, the male member tubular body 49 and the female body tubular body 47, Figs. 5—6, and the end caps 52 are made of metal or metal alloys, such as steel or aluminum alloy for example. Preferably, the spider member 134 is made of a plastic moulding and the cup-shaped valve spool 92 is also made of plastic. The rod 78 may be made of metal or plastic. However, it will be readily apparent that the tubular body members 49 and 47 may also be made of plastic, and in structures wherein one of the tubular member body is made integral with the master cylinder housing or the slave cylinder housing, it is evidently made of the same material as the cylinder housings themselves.

Whatever the structure adapted for particular applications, the hydraulic apparatus of the invention is conveniently prefilled with hydraulic fluid and pretested as described in detail in GB—A—1539879 or GB—A—2091362, the two halves of the leakproof quick-connect connector 32 being coupled by means of an appropriate clamping mechanism, the interlocking ring 154 being omitted. After prefilling of the hydraulic apparatus with hydraulic fluid and testing, the two halves of the connector 32 are coupled, the ring 154 is installed in its groove 156 in the peripheral surface 50 of the male member tubular body 49, and the diverse components are shipped to a motor vehicle manufacturer, prefilled with hydraulic fluid, for installation on a motor vehicle.

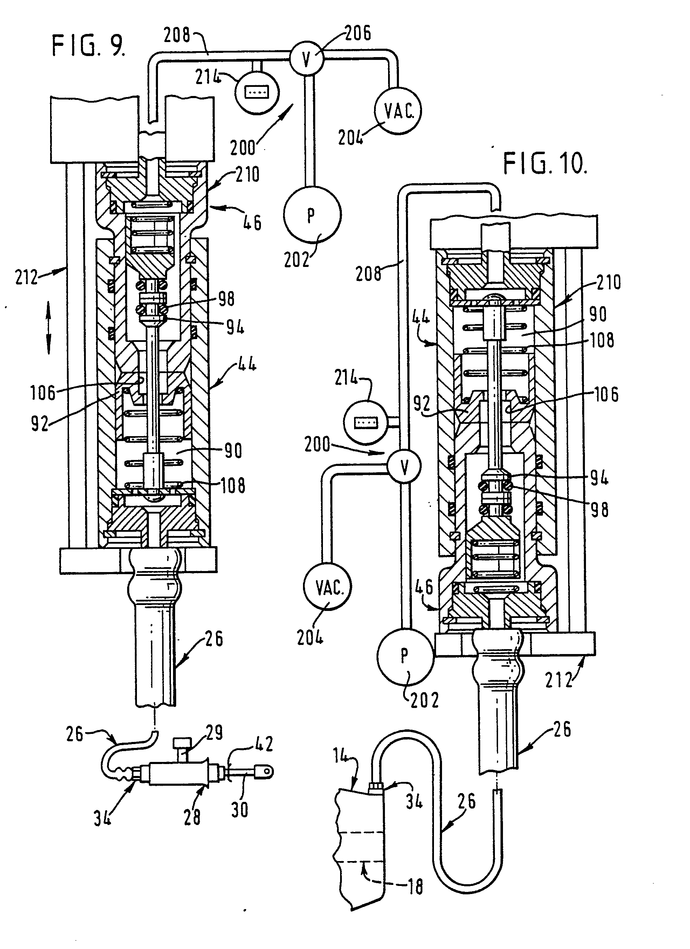

Alternatively, and as illustrated schematically at Figs. 9 and 10, the diverse modular components of the hydraulic apparatus may be prefilled individually with hydraulic fluid. Figs. 9 and 10 illustrate an apparatus and method for prefilling components, one consisting of the master cylinder 28 with a length of flexible conduit 26 readily installed by means of a conventional connector 34 onto the master cylinder 28, the female member 44 of the leakproof quick-connect connector 32 being installed at the end of the length of flexible conduit 26 and a second length of flexible conduit 26 being connected by means of a conventional connector 34 to the slave cylinder 18 at other end being provided with the male member 46 of the quick-connect connector 32.

As illustrated at Figs. 9 and 10, the hydraulic fluid filling apparatus 200 comprises a supply of hydraulic fluid 202, and a source of suction or vacuum 204 connected through a three-way valve 206 to a line 208 having an appropriate fitting generally designated at 210. Although the fitting 210 may take any appropriate form that fits a complementary half of the connector 32, provided with appropriate means for opening the port of the half connector, it is readily apparent that for the sake of convenience the fitting 210 may actually be a male member 46 when it is desired to fill with hydraulic fluid the portion of the hydraulic apparatus terminated by a connector female member 44, Fig. 9 and a female member 44 where it is desired to couple the hydraulic fluid filling apparatus 200 to a portion of the hydraulic apparatus terminated by a connector male member 46, Fig. 10.

As shown at Fig. 9, the fitting 210, taking the form of a connector male member 46, is coupled to the connector female member 44, on the end of the length of flexible conduit 26, by means of a clamping means 212, the resilient snap ring 154 (Figs. 5—6) being omitted such that after the filling operation has been effected, and the clamping means 212 released, the fitting 210 is readily disconnected from the connector female member 44. In the clamped position illustrated in Fig. 9 the line 208 is in fluid communication with the length of flexible line 26, which in turn is in communication with the fluid chamber within the master cylinder 28, the fluid chamber within the master cylinder 28 being in fluid communication with the hydraulic fluid reservoir, 29 in view of the extended position of the pushrod 30 as held by the clip 42 causing the piston, not shown, in the master cylinder 28 to be in a retracted position unmasking the port between the fluid chamber in the master cylinder and the reservoir 29. The valve 206 is switched to the position placing the vacuum source 204 in communication with the conduit 208, and the conduit 23 and the master cylinder 28, via the fitting 210 and the connector female member 44 such as to evacuate atmospheric air therefrom. The test of the integrity of the hydraulic apparatus portion may be effected by maintaining the vacuum and switching the valve 206 to a closed position, and measuring the vacuum in the line 208 over a predetermined period of time by way of a gauge 214. Subsequently, the valve 206 is turned to a position placing the hydraulic fluid supply 202, preferably maintained at a pressure slightly higher than atmospheric pressure, in communication with the line 208 such as to fill the length of flexible conduit 26, the master cylinder 28 and the fluid reservoir 29 with hydraulic fluid, together with the chamber 90 within the connector female member 44. As the clamping means 212 is released and the fitting 210 and connector female member 44 become progressively uncoupled, the spool valve 92 is progressively displaced, under the action of the spring 108 in a direction that increases the volume of the fluid chamber 90, until the port defined by the bore 106 at the tip of the spool valve 92 is closed by the enlarged head 94, provided with the O-ring 98, as illustrated at Fig. 6 with respect to the connector female member 44.

Fig. 10 illustrates the fitting 210, in the form of a connector female member 44, mounted on the end of the line 208 of the filling apparatus 200, in clamped coupling engagement with the connector male member 46 on the end of the length of flexible conduit 26 connected to the slave cylinder 18, preparatory to evacuating the hydraulic apparatus modular portion from atmospheric air, testing and filling with hydraulic fluid as previously explained.

It will be readily apparent to those skilled in the art that the filling apparatus 200 may be used with appropriate fixturing and clamping mechanisms for filling any modular portion of a hydraulic apparatus provided with one half of a full quick-connect connector 32 at the master cylinder end of the conduit 26, Fig. 1, at the slave cylinder end of the conduit 26, Fig. 2, at some point between the ends of the conduit 26, Fig. 3, or at both ends of the conduit 26, Fig. 4.

The structure of Fig. 4 may also be filled with hydraulic fluid in the form of two separate modular units, one consisting of the slave cylinder 18, the other consisting of the master cylinder 28, and the third consisting of the conduit 26 on each end of which is mounted a half connector such as, for example, a connector male member 46, a connector female member 44, or a female member on one end and a male member on the other end. The filling and testing apparatus 200 is conveniently used in the same manner as previously described for the purpose of filling each separate modular unit, including the conduit 26. The conduit 26 is individually filled by being first evacuated from atmospheric air, tested as to integrity if so desired, and subsequently filled with hydraulic fluid through one of the half connectors at one end of the conduit. The half connector at the other end of the conduit 26 remains closed during evacuation of the atmospheric air as long as the force of the spring 108, Fig. 6 urging the spool valve 92 to the position closing the connector female member 44 is high enough to overcome the atmospheric pressure applied on the end of the spool valve, in structures where a female member 44 is mounted on the free end or on both ends of the conduit 26, and as long as the force exerted by the spring 150 urging the spider member 134, in the connector male member 46, to a closed position is sufficient to overcome the atmospheric pressure applied to the frontal area of the end face 148 of the spool 142 on the end of the spider member, in structures having a connector male member 46 mounted on the free end of the conduit 26. For example, in a connector 32 according to the present invention having an overall diameter of about 24 mm. and an internal diameter of about 16 mm. for the bore 48 of the connector female 44, all other dimensions of the elements being proportionally at the same scale, the coil spring 108 in the connector male member 46 needs to exert a force of only 300 grams, or 11 oz.

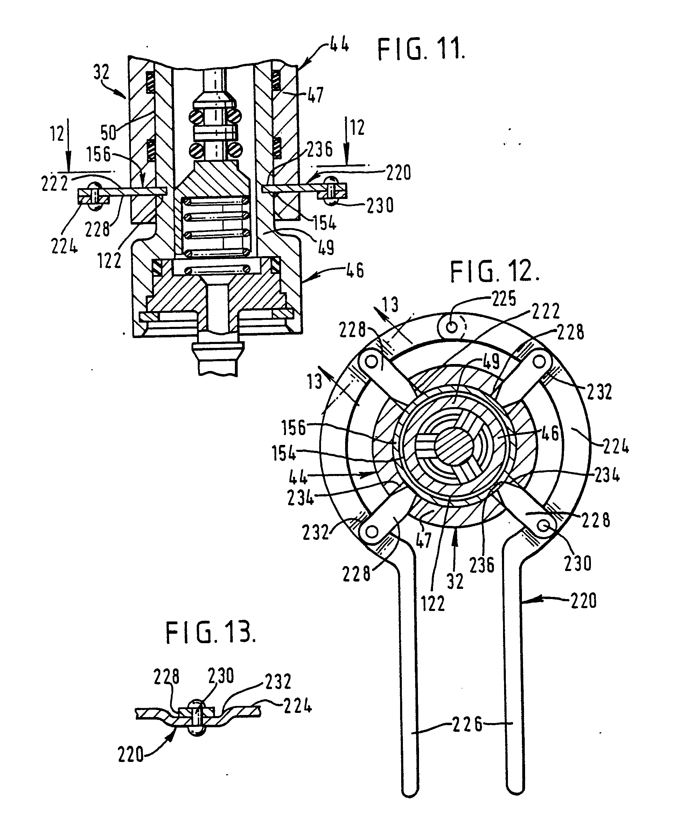

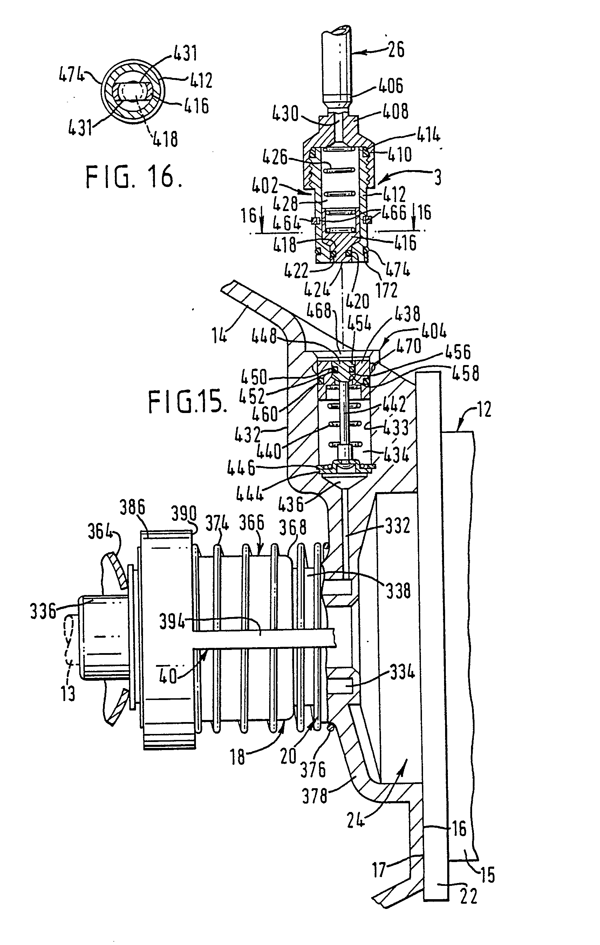

The leakproof quick-connect fitting or connector 32 heretofore described is of the one-way type. In other words, once the two halves of the connector, namely the female member 44 and the male member 46, are reconnected on a motor vehicle assembly line, for example, the internal locking between the members provided by the snap ring 154 being partially disposed in the groove 156 on the periphery of the male member tubular body 49 and in the groove 122 in the surface of the bore 48 of the female member tubular body 47, the male member 46 can no longer be uncoupled from within the female member 44. Such an arrangement preserves the integrity of the system and prevents tampering by unauthorized persons. However, it presents the inconvenience that if one of the components requires repair or replacement, the whole apparatus must be replaced, especially in sealed units where no provisions are made for replenishing the supply of hydraulic fluid and for bleeding the apparatus. It also presents the inconvenience that if work is to be effected on the motor vehicle engine, clutch or transmission, which requires removal of the affected components from the motor vehicle, the slave cylinder cannot be readily disconnected from the master cylinder. Such inconvenience is avoided by the modified connector structure of Figs. 11—12, requiring the use of a special tool for disconnecting the two halves of the leakproof quick-connect connector 32. An example of such special tool is illustrated at 220 at Figs; 11—13.

As shown at Figs. 11—12 the modification that permits uncoupling of the two halves of the connector 32 consists in forming a plurality of slots 222, for example three, or four as illustrated, extending radially through the wall of the female member tubular body 47 from the periphery thereof to the groove 122. The tool 220 takes the form of a partial ring 224 hinged at 225 and provided with a pair of symmetrically disposed extending handles 226. Four tangs 228, in the example of structure illustrated, each corresponding to one of the slots 222, are disposed at 90° from each other, radially projecting inwardly relative to the ring 224. Each tang 228 is pivotally mounted on one surface of the ring 224 by means of a pivot pin 230. The ring 224 has a shallow recess 232, best shown in Fig. 13, at the location where each tang 228 is pivotally attached to the ring, such as to permit only limited pivoting of the tang 228 about the pivot pin 230. Other means, such as return springs, may be used for urging the tangs 228 to a radial neutral position while still permitting limited pivoting facilitating introduction of the tip of each tang in a slot 222 after opening the tool 220 about the hinge 225 by spreading apart the handles 226 such as to permit the ring 224 to encircle the connector 32. Each tang 228 has a tapered tip 234 to facilitate introduction of the tip into a slot 222 and, when the handles 226 are manually pressed toward each other, the tip end surface 236 of the tang engages the outer surface of the ring 154 and compresses the ring to the bottom of the groove 156, thus causing the peripheral surface of the ring 154 to be flush with the peripheral surface 50 of the male member tubular body 46. The ring 154 being no longer engaged partially in the groove 122 in the female member tubular body 47, the female member 44 and the male member 46 may be uncoupled. If so desired, the slots 222 may be protected by a turn of adhesive plastic tape after installation of the hydraulic control apparatus of the invention on a motor vehicle, to prevent introduction of dirt in the slots 222 that may interfere with the operation of the tool 220 when it is desired to disconnect the two halves of the connector 32. It will be immediately apparent to those skilled in the art that the requirement for a special tool, such as the tool 222, will normally be a deterent to any attempt by unauthorized persons to uncouple the two halves of the connector 32 so provided with the slots 222.

Referring now to Figs. 14—16 a driveshaft 13 drives a gearbox 12 from a clutch assembly (not shown) of the kind shown in Fig. 1 and corresponding to parts shown in Fig. 1 carry the same reference numerals. The slave cylinder is connected to the master cylinder as in Fig. 1 by conduit 26.

In Fig. 14, the slave cylinder 18 has a housing 20 cast integral as a single piece with the clutch bell housing 14, and provided with a passageway 332 leading into an annular chamber 334 formed between two concentric tubular portions 336 and 338 cast integral together with the clutch bell housing 14, the tubular portion 336 being commonly known as a quill tube. An annular piston 340 is reciprocably and slidably disposed in the annular chamber 334 of the cylinder housing 20 between the two concentric tubular portions 336 and 338, the piston 340 having a relatively thin cylindrical portion slidable fitting about the periphery of the inner tubular portion 336, as shown at 342, and an integrally formed larger diameter annular head portion 344 slidably fitting between the concentric tubular portions 336 and 338. An elastomeric annular seal 346, V-shaped in section, is freely disposed in the annular chamber 334 above the annular head 344 of the piston 340, such as to prevent leakage of fluid from the annular chamber 334 past the piston 340.

A metallic sleeve, or carrier, 348 is slidably disposed around the periphery of the inner tubular portion 336 of the cylinder housing 20. The carrier 348 has a flange end portion 350 freely engaged with the end face 352 of the cylindrical portion 342 of the piston 340, and another flange portion 354 disposed at its other end having a bent-over rim 356 fixedly supporting the outer race 358 of a ball bearing 360 forming the clutch throw-out bearing, the bearing outer race 358 being for example press-fitted within the carrier rim 356. The inner race 362 of the throw-out bearing 360 is arranged to engage the end of clutch release fingers 364 such that when the throw-out bearing 360 is displaced outwardly from the position indicated in full line at Fig. 14 the clutch 11 is released.

A dust cover 366 is disposed surrounding a portion of the carrier 348 and a portion of the peripheral surface of the outer tubular portion 338 of the cylinder housing 20. The dust cover 366 is generally cylindrical in shape and is molded of plastic such as nylon. One end of the dust cover 366 is formed with an inwardly radially projecting flange or lip 368 having an inner edge 370 in sliding engagement with the peripheral surface of the cylinder outer tubular portion 338. The other end of the dust cover 366 has an outwardly projecting flange portion 372 abutting against the flange portion 354 of the carrier 348. A coil spring 374 is held in compression between the flange portion 354 of the carrier 348 and an annular abutment 376 formed on a radially outwardly extending flange portion 378 of the cylinder housing 20, and thus tends to urge the flange 372 of the dust cover 366 engaged with the flange portion 354 of the carrier 348 with the result that when the throw-out bearing 360 is reciprocated, as a result of reciprocation of the piston 340, the dust cover 366 reciprocates in unison with the throw-out bearing, the inner edge 370 of the dust cover lip 368 remaining in engagement with the peripheral surface of the outer tubular portion 338 of the slave cylinder housing 20.

The slave cylinder housing 20 has at least a pair of diametrically arranged outwardly projecting lugs 380 disposed at the end of the outer tubular portion 338 of the slave cylinder housing 20, each lug 380 having an inclined leading edge forming a ramp 382. During assembly of the slave cylinder 18, the lugs 380 are engaged below the dust cover 366 by snapping the edge 370 of the dust cover lip 368 over the outwardly projecting lugs 380, the lug ramp 382 facilitating the passage of the lip edge 370 over the lugs 380.

The dust cover 366, in addition to acting as a seal against introduction of dirt therebelow, acts as a retainer preventing travel of the carrier 348 and the throw-out bearing 360 after assembly of the slave cylinder 18 beyond the limits defined by the inner face of the dust cover lip 368 engaging the lugs 380, under the urging action of the compressed coil spring 374. The coil spring 374 is relatively weak and, functionally, operates only to urge the throw-out bearing 60 constantly in engagement with the end of the fingers 364 of the clutch release mechanism, after installation of the assembly consisting of the clutch bell housing 14 and the integral slave cylinder 18 in a motor vehicle transmission train.

A restraining strap, designated generally at 40, is provided for retracting the throw-out bearing 360 to the position shown in Figs. 1 and 2, qfter assembly of the slave cylinder 18 against the action of the compressed coil spring 374. As described above, the restraining strap 40 holds the throw-out bearing in a retracted position during filling of the hydraulic apparatus with hydraulic fluid, during shipment to a motor vehicle manufacturer and during assembly of the hydraulic clutch release system of the invention on a motor vehicle on the assembly line. Prefilling of the apparatus may be effected by filling the reservoir 29 (Fig. 1) the master cylinder 28, the line 26 and the slave cylinder 18 with hydraulic fluid at a pressure slightly over atmospheric pressure, after opening a bleed nipple, not shown, until all atmospheric air is evacuated from the apparatus, in the same manner as disclosed in detail in GB—A—1539879. Alternatively, atmospheric air may be evacuated from the whole apparatus and the apparatus subsequently filled with fluid, as is explained in detail in GB—A—2091362.

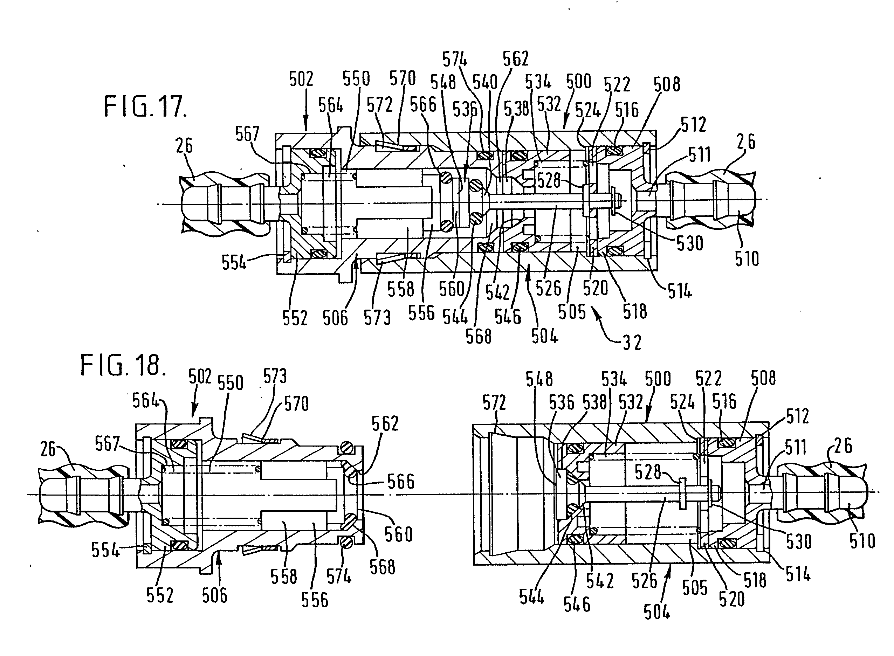

The restraining strap 40 is preferably molded of plastic, such as nylon, and comprises an annular collar 386 provided with a pair of substantially parallel inwardly directed end flanges 388 and 390, Fig. 2, fitting over respectively a flange 392 formed on the end of the rim portion 356 of the carrier 348 and the end of the flange 372 of the dust cover 366. Alternatively, the restraining strap 40 and the dust cover 366 may be molded in a single piece, not shown. A pair of bands or strips 394, Fig. 15, are integrally molded with and extend from the strap annular collar 386, the free end of each band or strip 394 terminating, for example, with an integral strut, not shown, or other means for attaching the end of each band or strip to the slave cylinder housing 20, at the housing flange 378. Each band or strip 394 of the restraining strap 40 is provided with a weakened portion, which may be a portion of reduced thickness, or a portion of reduced width, or both. After installation of the apparatus of the invention in a motor vehicle, and upon first actuation of the slave cylinder 18, hydraulic fluid displaced from the master cylinder 28 to the annular chamber 334 in the slave cylinder casing 20 causes displacement of the seal 346 and piston 340, and displacement of the throw-out bearing 360 as a result of the coupling between the piston 340 and the throw-out bearing through the carrier 348, with the result that the bands or strips 394 are broken at their weakened portion, thus releasing the throw-out bearing 360 for normal operation by the slave cylinder 18.

An alternative form of leakproof quick-connect connector 32 is provided at one end of the flexible conduit 26 interconnecting the master cylinder 28 as in Fig. 2 to the slave cylinder 18. The other end of the flexible conduit 26 is attached to the master cylinder 28 by the conventional connector 34. It will, however, be readily apparent to those skilled in the art that the end connector 34 connecting the flexible conduit 26 to the master cylinder 28 may be a leakproof quick-connect connector as in Fig. 1 or that both end connectors may be conventional and leakproof quick-connect connector be placed somewhere along the flexible conduit 26 as in Fig. 3 permit separating the master cylinder 28 from the slave cylinder 18, after prefilling of the clutch control apparatus with hydraulic fluid, testing the integrity of the apparatus and prior to shipment to a motor vehicle manufacturer for assembly in a motor vehicle on the assembly line. Alternatively the arrangement shown in Fig. 4 may apply.

In Fig. 14 the connector 32 connecting the flexible conduit 26 to the inlet passageway 32 of the slave cylinder 18 has been arbitrarily chosen to be of the leakproof quick-connect type. The connector 32 is formed of two complementary half connectors or members 402 and 404 of respective male and female type. The half connector 402 is mounted on the end of the flexible conduit 26 by having an appropriate tubular fitting 406 having a reduced diameter portion, not shown, projecting within the flexible conduit 26, an appropriate clamp, not shown, ensuring a leakproof mechanical connection between the end of the flexible conduit 26 and the fitting 406, or any other appropriate manner of coupling of the flexible conduit 26 to the fitting 406 may be used e.g. as shown in Fig. 5. The tubular fitting 406 is formed integral with an end cap 408 having a rim 410 into which is threadably fastened, crimped or welded, a tubular body member 412, an appropriate gasket 414 ensuring leakproof connection between the two elements in threaded or crimped structures. A valve spool 416, having a cylindrical reduced end portion 418 provided with a groove 420 in which is disposed an O-ring 422, is slidably disposed in the tubular body member 412. The tubular body member 412 has a restricted diameter portion or orifice 424 at its open end such that the spool valve 416, urged by a coil spring 426 disposed therebehind tends to be displaced to the position shown in Fig. 15, the interior space or chamber 428 within the tubular body member 412 being closed at its open end by the O-ring provided reduced diameter portion 418 of the valve spool 116 engaged in the orifice 424. The chamber 428 within the tubular body member 412 is, at its other end, continuously placed in communication, through a passageway 430 disposed in the end cap 408, with the interior of the flexible conduit 26. Two opposite sides of the valve spool 416 are cut out, as shown at 431, Fig. 16 such that the body of the valve spool 416 does not prevent flow of fluid into, and from, the chamber 428, the valve spool reduced end portion 418 only being effective to close the end of the chamber 428 when urged within the restricted diameter portion or orifice 424 of the tubular body member 412.

The connector second half 404, or female member in Fig. 14, takes the form of a housing 432 which may conveniently be cast integral with the clutch bell housing 14 and the housing 20 of the slave cylinder 18, as shown or in the alternative, may take the form of a cylindrical housing fastened to the unitary casting of the clutch bell housing 14 and slave cylinder housing 20. A bore 433 in the housing 432 defines a chamber 434 having an end 436 placed in communication with the passageway 332 leading into · the slave cylinder annular chamber 334. An annular sleeve 438 is slidably disposed within the bore 433 and is normally urged towards the open end of the bore 433 by a coil spring 440. A rod 442 attached to the bottom of the bore 433 by means of an appropriate generally U-shaped bracket 444, held in position by an expandable split spring ring 446 disposed in an appropriate groove in the surface of the bore 433, as provided on its other end with an enlarged head portion 448 having a peripheral groove 450 in which is disposed an O-ring 152. The O-ring provided enlarged head portion 448 of the rod 442 fits within the bore or orifice 454 of the annular sleeve 438, and the bore 454 of the annular sleeve 438 has a reduced diameter portion forming an annular abutment 456 for engagement with a corresponding annular surface 458 on the interior end face of the rod enlarged head portion 448, such as to effectively limit the outward displacement of the annular sleeve 438. The peripheral surface of the annular sleeve 438 is provided with a groove in which is disposed a compressed O-ring 460. It is evident that in the position of the annular sleeve 438 shown at Fig. 15 the inner chamber 434 of the tubular housing 432 is effectively appropriately isolated from the ambient.

After assembly of the master cylinder 28 and slave cylinder 18, and attachment of the flexible conduit 26 to the master cylinder 28 as in Fig. 2, the hydraulic apparatus is filled with hydraulic fluid for example by evacuating the atmospheric air from the interior of the apparatus and filling the apparatus with an appropriate hydraulic fluid. In order to accomplish the exhausting and filling operation, and effecting appropriate tests on the apparatus, the two half connectors 402 and 404 may be temporarily coupled as illustrated at Fig. 14 by introducing the tubular body 412 of the half connector 402 into the tubular housing 432 of means of an appropriate clamping means 462 (shown in broken lines in Fig. 14) in a holding fixture, not shown. As a result of the end face of the valve spool end portion 418 engaging with the end face of the rod enlarged head portion 448, the spool valve 416 retracts within the tubular member 412 against the action of the spring 426. Simultaneously the annular sleeve 438 retracts thus compressing the spring 440. As a result of the end face of the annular sleeve 438 being pushed by engagement with the end face of the tubular member 412, the internal chamber 128 and 134 of the two half connectors 102 and 104 are open to one another, thus permitting direct fluid communication between the annular chamber 334 of the slave cylinder 18 and the interior of the master cylinder 28 through the flexible conduit 26. After filling the apparatus with hydraulic fluid, and after running appropriate tests, the connection between the master cylinder 28 and the slave cylinder 18 is broken by releasing the clamp 462, thus causing the valve spool 416 of the half connector 402 to close the orifice 424 under the action of the return spring 426, and the annular sleeve 438 of the half connector 404 to be displaced by the coil spring 440 to an appropriate position closing the orifice 454 in the annular sleeve 438, as illustrated at Fig. 15. Alternatively the apparatus may be pre-filled using the filling apparatus shown in Figs. 9 and 10.

The slave cylinder 18 is thus shipped, provided with its restraining strap and prefilled with hydraulic fluid, to the user, typically a motor vehicle manufacturer. The prefilled slave cylinder 18 is shipped with a separate corresponding master cylinder 28 and an attached fluid reservoir 29, either made integral with the master cylinder or connected thereto by a flexible conduit, and the flexible conduit 26 connected to the master cylinder, all being also prefilled with hydraulic fluid. Prior to shipment, as elastically outwardly expandable spring steel ring 464 is placed in a corresponding groove 466 in the periphery of the tubular member 412 of the half connector 102.

During assembly of the motor vehicle on an assembly line, the master cylinder 28, is installed in its appropriate operative position and location on the vehicle, and the slave cylinder 18, which, in Fig. 14 is part of the clutch bell housing 14, is installed separately on the motor vehicle frame. At some station on the assembly line, the master cylinder 28 and the slave cylinder 18 are interconnected by pushing the half connector 402 at the end of the flexible conduit 26 into the half connector 404. The half connector tubular housing 132 is provided at its open end with an internal tapering and converging surface, or frusto conical surface 468 which, during introduction of the tubular body member 412 within the bore 433, causes the elastically compressible split ring 464 to progressively collapse within the groove 466 to conform to the internal diameter of the bore 433, while the end face of the tubular member 412 progressively displaces the annular sleeve 438 in the bore 433 to the position indicated at Fig. 14. The bore 433 is provided with a groove 470, Fig. 15, allowing the elastically compressible and expandable ring 464 to expand when reaching the level of the groove 470 such as to lock the tubular member 412 of the half connector 402 in the bore 433 of the half connector 404. For that purpose, the depth of the groove 470, is such that when the ring 464 expands within the groove 470 a sufficient portion of the ring extends into the retaining groove 466 on the periphery of the tubular member 412. The locking arrangement provided by the combinations of the grooves 466 and 470 and of the ring 464 is irreversible or, in other words, once the two half connectors 102 and 104 are interlocked, it is no longer possible to separate them without exerting considerable force, such as to preclude accidental or willful disconnect. If desired, the embodiment of Fig. 14 could include a plurality of slots similar to slots 222 in Figs. 11 and 12 to facilitate release of the ring 464 by the Fig. 12 tool.

To prevent leakage past the connector, the tubular member 412 of the half connector 402 has a peripheral groove 472 proximate at its end in which is disposed an O-ring 474. The locking groove 470 in the half connector tubular housing 432 has its lower sidewall provided with a radius or taper, such as to prevent tearing or damaging the O-ring 472 when the tubular member 412 is pressed into the bore 433 during re-assembly of the connector on the motor vehicle assembly line. It is readily apparent that if, as a result of the momentary connection of the two half connectors 402 and 404 during prefilling and testing of the apparatus the O-ring 474 is damaged during separation of the two half connectors, the O-ring 474 may be replaced at very low cost prior to shipment of the apparatus to a motor vehicle manufacturer.

Referring now to Fig. 17 a further type of leakproof quick-connect connector comprises two complementary half connectors or members 500, 502 having tubular bodies 504, 506. The half connector 500 is the female type and the half connector 502 is the male type.

The body 504 has a bore 505 having an enlarged sections which locates an end cap 508. The end cap has an integral outwardly projecting fitting 510 and defines a passage 511 permitting fluid communication with the interior of conduit 26 indicated in broken lines which is suitably held on fitting 510 e.g. in the manner described with respect to Figs. 5 and 6. The end cap 508 is held in place by snap-ring 512 which locates in a groove 514 in the body 504. The end cap 506 is formed with a peripheral groove which locates an elastomeric O-ring 516. The end cap 508 is also formed with an annular rim 518 which abuts a circular plate 520 formed with circumferentially spaced apertures 522. The plate 520 locates between the rim 518 and a shoulder 524 on the body 504. The plate 520 is formed with a central bore which slidably locates one end of a rod 526. The rod 526 is formed with a peripheral shoulder 528 to the left of the plate 520 and has a stop 530 thereon to the right of the plate as viewed in Figs. 17 and 18. A generally cup-shaped spool valve 532 is slidable in the bore 505 and is biased normally away from plate 520 by a spring 534. The opposite end of the rod 526 is formed with an enlarged head 356 and the spool valve 532 has an internal bore 538 capable of receiving the head 356 when the spool valve is displaced by spring 534 as shown in Fig. 18. Such displacement causes interengagement of tapered surfaces 540, 542, on the head and spool valve respectively an elastomeric O-ring 544 on the head ensuring sealing contact to prevent leakage of fluid. The spool valve 532 carries an elastomeric O-ring 546 which sealing engages the surface of bore 505 to prevent leakage of fluid. The extreme left hand surface of the head 536 forms an abutment surface 548.

The body 506 of the male member 502 has an internal bore 550 having an enlarged section which locates an end cap 552 identical to end cap 508 and which is held in place by a snap-ring 554. The cap 552 is fitted to a corresponding length of conduit 26. A spider 556 has legs 558 which extend radially and slidably engage the surface of bore 550. The right hand end of the spider 556 forms an abutment surface 560 engageable with abutment surface 548 of the enlarged head 536. The right hand end of the bore 550 is reduced in diameter to form a port 562. The spider is normally biased toward the port 552 by a spring 564 which locates in a counterbore 567 in the end cap 552. The spider 556 carries an elastomeric O-ring 566 which, as shown in Fig. 18, is arranged to sealingly engage a tapered surface 568 of the body 506 adjacent the port 562. The exterior of the male member tubular body 506 carries a sprag element 570 which locates in a complementary shaped internal groove 572 in the female member tubular body 504 to inhibit separation of the coupled bodies. The sprag element preferably comprises a split ring formed with bent-up sprags 573 defined between axial slits. The body 506 also carries an elastomeric O-ring 574 which sealingly engages the surface of bore 505 in body 504.

In the coupled Fig. 17 condition, fluid can pass through the connector as in the earlier described embodiments.

Prior to coupling together the female and male members 500, 502 fluid in the respective connect halves (introduced in the manner described with respect to the other embodiments) is sealed against leakage by contact between the O-ring 544 and surface 542 in the female member and contact between O-ring 566 and surface 568 in the male member. On bringing the two members, together, the male member 502 is inserted in bore 505 of the female member with the O-ring 574 on the male member sealingly the wall of bore 505 in the female member. Insertion causes the right hand end of the body 506 to abut the left hand end of spool valve 532 so that the latter moves to the right against the bias of spring 534 whereby the bore 538 moves clear of the enlarged head 536. At the same time interengagement of abutment surfaces 548, 560 causes the O-ring 566 and tapered surface 568 to separate, the spring 564 being compressed as the body 506 moves to the right relative to the spider. Eventually the sprags 573 snap into the groove 572 to inhibit separation of the male and female elements. To facilitate release of the sprag element a tool somewhat along the lines of that shown in Fig. 12 may be used with the body 504 of the female member adapted appropriately. The connector thereby permits the male and female members to be connected together without loss of fluid to the ambient.

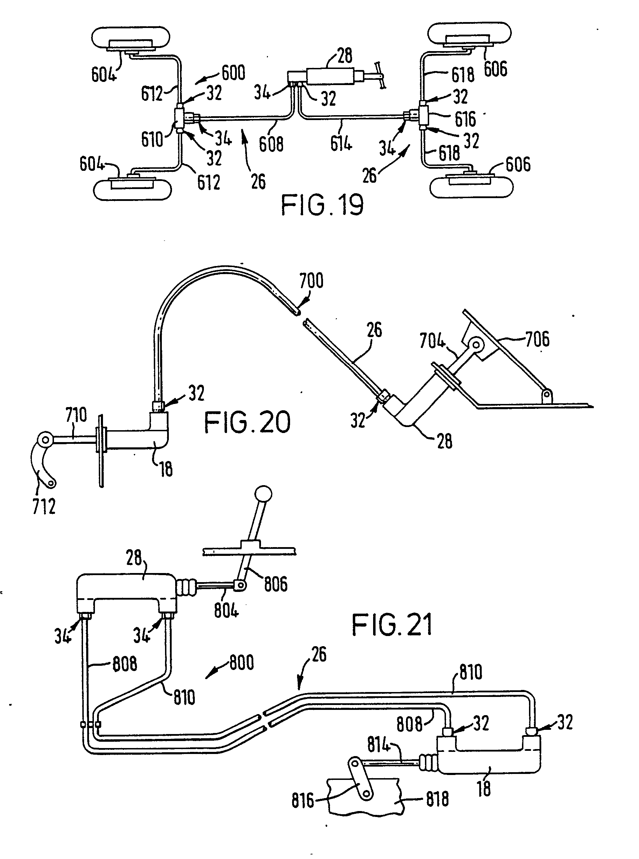

As illustrated at Figs. 19—21, the present invention has many applications, more particularly in the automotive field. For example, as illustrated at Fig. 19, the present invention permits to design a motor vehicle hydraulic brake system, as illustrated generally and schematically at 600, made of prefilled pretested modular units. For the sake of illustration, the motor vehicle hydraulic brake system 600 is shown as comprising a brake pedal actuated master cylinder 28, a pair of front wheel brake drums or disks 604 each actuated by an appropriate slave cylinder, not shown, and a pair of rear brake drums or disks 606 operated by slave cylinders, not shown. In the example of structure illustrated, the master cylinder 28 is connector to the slave cylinder of each front wheel drum or disk 604 by conduit generally indicated at 26 and comprising a conduit 608 a T-connector 610 and separate conduits 612. A conventional connector 34 connects one end of the conduit 608 to an outlet of the master cylinder 28, while a conventional connector 34 connects the other end of the conduit 608 to the inlet of the T-connector 610. A leakproof quick-connect connector 32 connects the free end of each wheel conduit 612 to the T-connector 610. The master cylinder 28, together with the line 608 and the T-connector 610 form therefore a modular unit which may be individually filled with hydraulic fluid. Each slave cylinder operating the brake drum or disk of the front wheel 604 together with the corresponding wheel or conduit 610 forms a separate modular unit which may be filled with hydraulic fluid individually and connected, on the motor vehicle assembly line, to the T-connector 610 by means of the leakproof quick-connect connector 32.

Similarly, the master cylinder 28 is connected to the slave cylinders for operating the brake drums or disks of the rear wheels 606 through conduit generally indicated at 26 and comprising a conduit 614, a T-connector 616 and separate wheel conduits 618. In the example structure illustrated, the conduit 614 is attached to a second outlet of the master cylinder 28 by means of a leakproof quick-connect connector 32, and the other end of the conduit 614 is connected to the inlet of the T-connector 316 by means of a conventional connector 34. The modular unit consisting of the line 614 and the T-connector 616 can thus be filled separately with hydraulic fluid as a single modular unit. Each wheel conduit 618 and its associated slave cylinder for actuating the brake shoe or disk pad of the rear wheel drums or disks 606 may be filled with hydraulic fluid as a modular unit which, on the assembly line is connected into the hydraulic brake system 600 by means of the leakproof quick-connect connector 32 which connect to the T-connector 616.

It will be appreciated, by those skilled in the art, that a hydraulic brake system, according to Fig. 19, or similar structures provided with prefilled and pretested separate modular units, allows extreme flexibility in installing a hydraulic brake system on a motor vehicle, on the assembly line, modular unit by modular unit, and allows connection of the whole brake hydraulic system on the motor vehicle without filling the system with hydraulic fluid after installation. Also, it permits repairs to be effected by replacing modular units of a brake system, without the requirement of purging the whole system and refilling with hydraulic fluid after the repair or replacement of components has been effected.

Fig. 20 illustrates an example of motor vehicle throttle hydraulic control apparatus 700 which comprises principally a master cylinder 28 whose input member or pushrod 704 is operated by an accelerator pedal 706 and a slave cylinder 18 having an output member 710 for actuating an engine throttle lever 712 the master cylinder 28 being connected to the slave cylinder 18 by a flexible conduit 26. In the example of structure illustrated, the conduit 26 is connected at one end to the master cylinder 28 through a leakproof quick-connect connector 32, and is connected to the slave cylinder 18 at its other end also by means of a leakproof quick-connect connector 32.

Such a structure permits to fill with hydraulic fluid and test individually, the master cylinder 28 as a single modular unit, the conduit 26 as a second modular unit and the slave cylinder 708 as a third modular unit, install the master cylinder 702 and the slave cylinder 708 on a motor vehicle, and connect them with the conduit 714 which may be routed as required through the motor vehicle engine compartment, and which may be routed over long distances as, for example, in installations in rear engine motor vehicles. It is evident that, if so desired, the conduit 714 may be connected to one of the cylinders by a conventional cheaper connector, and that the cylinder with the conduit 714 thus attached thereto forms a separate modular unit which may be individually filled with hydraulic fluid and tested.

Fig. 21 schematically illustrated another example of application of the invention to a hydraulic gear shift control for a motor vehicle. The hydraulic shifter, designated generally at 800, comprises a double acting master cylinder 802 having an input the member or pushrod 804 reciprocable by a shift lever 806 under the control of the motor vehicle driver. The double acting master cylinder 802 is connected via two flexible conduits 808 and 810 to the double acting slave cylinder 812 having an output member 814 operating a shifter 816 on a transmission casing 818. The shifter system 800 is refilled and pretested at the factory prior to shipping to the motor vehicle manufacturer and, if so desired to provide flexibility in the installation of the apparatus on a motor vehicle on the motor vehicle assembly line, is supplied in prefilled pretested modular units which, in Fig. 21 consists of the master cylinder 802 provided with the conduits 808 and 810 attached thereto by means of conventional connectors 34, the other ends of the conduits 808 and 810 being provided with one half of a leakproof quick-connect connector 32, the other half of which is made integral with the slave cylinder 812. The slave cylinder 512 may thus be filled separately with hydraulic fluid and tested such as to form a separate modular unit.

It will be readily appreciated by those skilled in the art that the modular quick-connect system is most advantageous as it eliminates the need to fill the system after installing the components of the system on a motor vehicle on the assembly line and to purge the apparatus in situ. Moreover it permits great flexibility of installation without the inconvenience of having a component of the apparatus without the inconvenience of having a component of the apparatus provisionally attached to the motor vehicle frame or body by straps, strings or wires, or left dangling on the end of a flexible hose or conduit, which may cause accidental damage to that component.

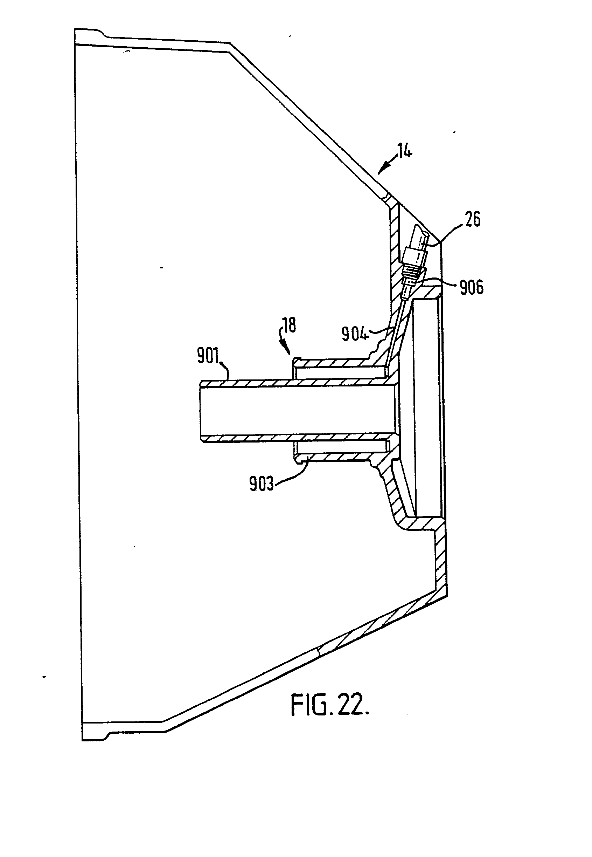

Figs. 22 to 25 illustrate various ways in which a slave cylinder can be carried by a clutch bell housing.

In Fig. 22, inner and outer concentric tubular portions 901 and 903 of the slave cylinder 18 are integral with the bell housing 14 somewhat as shown in Fig. 14 with a passageway 904 for fluid leading from a chamber 906 which receives components of a female quick connect connector half.

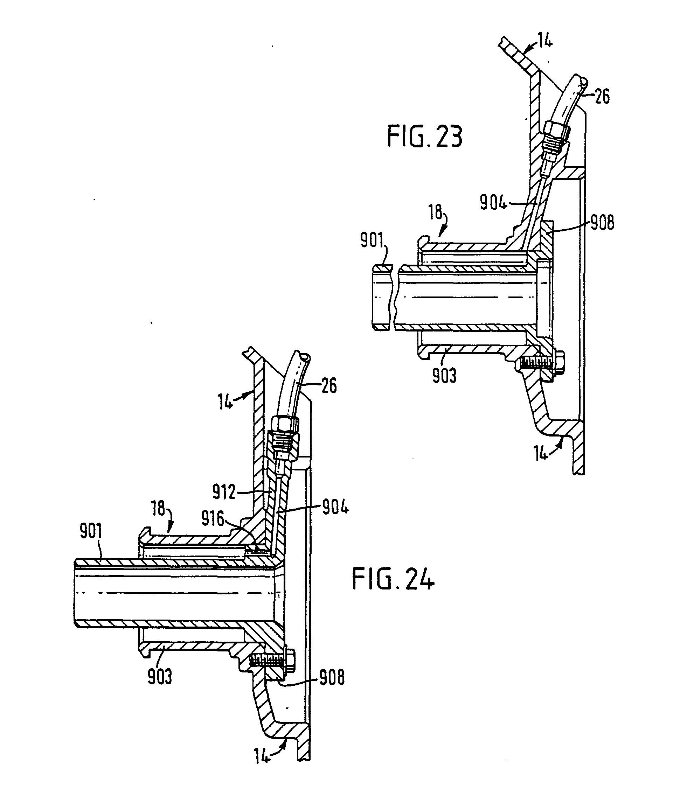

In Fig. 23, the inner tubular portion 901 is a separate component formed with a flange 908 at its right-hand end which enables the portion 901 to be bolted on to the bell housing 14. The passageway 904 in this case is formed in the bell housing as in Fig. 22.

In Fig. 24 the inner tubular portion 901 is formed with a flange 908 as in Fig. 23 and the flange has a radial extension 912. The passageway 904 is formed in the extension 912 in this embodiment rather than in the bell housing 14. The passageway 904 communicates with an axial bore 916 leading to the annular space between the tubular portions 901, 903.

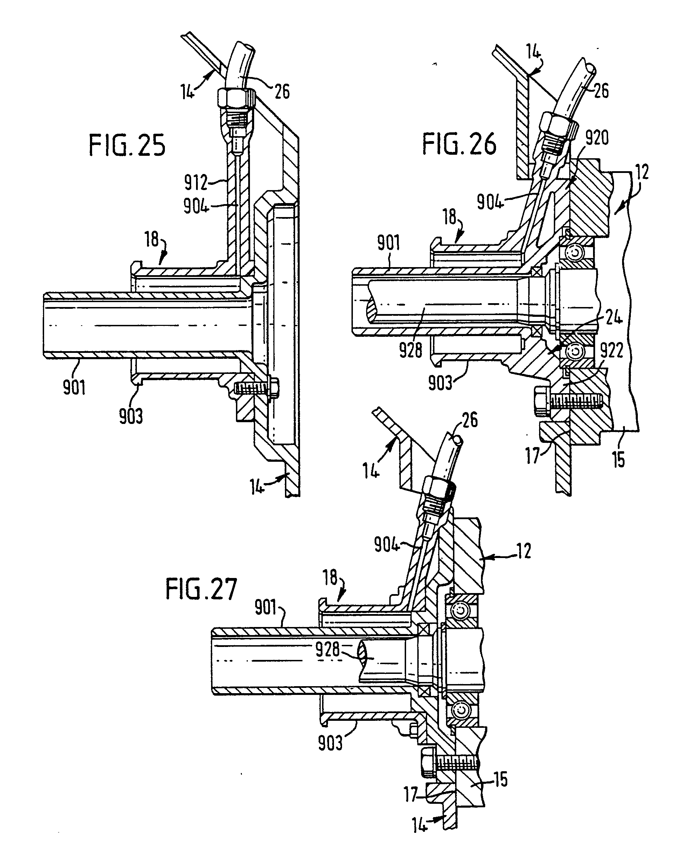

In Fig. 25 the Fig. 24 arrangement is reversed with tubular portion 903 bolted to the bell housing and having a radial extension 905 formed with the passageway 204.

Although reference has been made hereinbefore to the slave cylinder being part of the bell housing, it may alternatively be part of the transmission or gear box casing end plate. In the latter case, the slave cylinder is pre-assembled to the transmission casing by being mounted on or formed integrally with the transmission casing end plate. Figs. 26 and 27 illustrate such an alternative arrangement.

In Fig. 26 the inner and outer tubular portions 901, 903 are formed as part of a one piece unit 920 having a flange 922 by which it can be bolted to the end face 17 of a transmission casing 15. The transmission 12 has a driveshaft 920 coaxial with the slave cylinder 18. The passageway 904 is formed in the unit 920. The slave cylinder 18 projects into the bell housing 14 when the latter and the transmission casing 15 are bolted together.

In Fig. 27 the tubular portion 901 is bolted to the end face 17 of the transmission casing 15 and the tubular portion 903 is secured as a separate component to tubular portion 901.

It will be appreciated by those skilled in the art that the invention may be used in combination with any type of concentric slave cylinder or any hydraulic control apparatus for a motor vehicle mechanical clutch, whether utilizing a concentric slave cylinder or a more conventional cylindrical slave cylinder.

In normal commercial circumstances the parts of the hydraulic control apparatus of the invention will be mass produced with tolerances which will allow any master cylinder, conduit and connector member to be connected to any slave cylinder, conduit and complementary connector member which have been specifically designed and manufactured for operation therewith. Also the invention facilitates the filling and bleeding of the master or slave cylinder, conduit and connector member by using a dummy complementary connector member, conduit and slave or master cylinder respectively which remains part of the filling and bleeding apparatus as in Figs. 9 and 10 and is highly advantageous in that respect.

The invention thus provides the opportunity of performing a useful functional test of the master cylinder or slave cylinder.

## Claims

1. A method of prefilling a hydraulic control apparatus prior to installation of said apparatus on a vehicle or machine, said apparatus when installed comprising a hydraulic master cylinder (28) a remote hydraulic slave cylinder (18) and a conduit (26) connecting the master cylinder to the slave cylinder, characterised by providing a connector (32) through which hydraulic fluid can pass, the connector being of a leakproof quick-connect type and comprising a pair of half-connector members (44, 46; 404, 402; 500, 502) each including valve arrangements (92, 94 and 134, 138; 438, 448 and 416, 424; 532, 536 and 556, 568) which valve arrangements are both closed when the half-connector members are uncoupled and are both open when the half connectors are coupled to enable the cylinders (18, 26) to be interconnected through the conduit (26), and filling the cylinders and conduit with hydraulic fluid prior to installation on the vehicle or machine to provide separate modular units prefilled with said hydraulic fluid for installation on the vehicle or machine with the half-connector members uncoupled whereby the installed modular units can subsequently be interconnected by coupling together the half connector members of the connector (32) to form the hydraulic control apparatus.

2. A method of installing a hydraulic control apparatus on a vehicle or machine, said apparatus, when installed, comprising a hydraulic master cylinder (28), a remote hydraulic slave cylinder (18), and a conduit (26) connecting the master cylinder to the slave cylinder, characterised by providing a connector (32) through which hydraulic fluid can pass, the connector being of a leakproof quick-connect type and comprising a pair of half-connector members (44, 46; 404, 402; 500, 502) each including valve arrangements (92, 94 and 134, 138; 438, 448 and 416, 424; 532, 536 and 556, 568) which valve arrangements are both closed when the half-connector members are uncoupled and are both open when the half connectors are coupled to enable the cylinders (18, 26) to be interconnected through the conduit (26), and filling the cylinders and conduit with hydraulic fluid prior to installation on the vehicle to provide separate modular units prefilled with said hydraulic fluid, installing the separate modular units on the vehicle or machine with the half-connector members of the connector (32) uncoupled and interconnecting the installed modular units by coupling together the half connector members of the connector (32) to form the hydraulic control apparatus.

3. A method according to Claim 1 or 2 characterised by mounting one of said half-connector members (44) on the master cylinder and the other of said half-connector members (46) on one end of the conduit (26), the other end of the conduit being connected to the slave cylinder (18).

4. A method according to Claims 1 or 2 characterised by mounting one of said half-connector members (44, 404) on the slave cylinder and the other of the half-connector members (46; 402) on one end the conduit (26), the other end of the conduit being connected to the master cylinder (28).

5. A method according to Claim 1 or 2 characterised by positioning the connector (32) at some intermediary position between the ends of the conduit (26) with the respective ends of the conduit remote from the connector connected to the master cylinder (28) and slave cylinder (18).

6. A method according to Claim 1 or 2 characterised by mounting one of the half-connector members (46) of one said connector (32) at one end of said conduit (26) and the other of its half-connector members (44) on the master cylinder (28) and mounting one of the half-connector members (46) of another said connector (32) at the other end of said conduit (26) and the other of its half-connector members (44) on the slave cylinder (18).

7. A method according to any preceding claim characterised by temporarily connecting the half-connector members (44, 46; 404, 402; 500, 502), filling the cylinders (18, 28) and conduit (26) with hydraulic fluid, and subsequently disconnecting the half-connector members.

8. A method according to any of Claims 1 to 4 characterised by filling one of the cylinders (18) with hydraulic fluid through the half-connector member (44) thereon to form a filled modular unit, and filling the other cylinder (28) and the conduit (26) through the other half-connector member (46) at one end of the conduit (26), the other end of the conduit (26) being connected to the other cylinder (28) to form a second filled modular unit.

9. A method according to Claim 1, 2 or 5 characterised by filling with hydraulic fluid the master cylinder (28) and part of the conduit (26) connected thereto through the half-connector member (44) on said conduit part, and filling with hydraulic fluid the slave cylinder (18) and part of the conduit (26) connected thereto through the half-connector member (46) on that conduit part to form two filled modular units.

10. A method according to Claim 1, 2 or 6 characterised by filling the conduit (26) through a said one half-connector member (46) of the connectors thereon to form a filled modular unit, and filling the respective master and slave cylinders (28, 18) through said other half-connector members (44) of the connectors thereon to form two further filled modular units.

11. A method according to any preceding claim characterised by evacuating atmospheric air from the apparatus or modular units prior to connecting the apparatus or modular units to a source of hydraulic fluid for filling.

12. Hydraulic control apparatus for installation in a vehicle or machine, said apparatus when installed comprising a hydraulic master cylinder (28), a remote hydraulic slave cylinder (18) and a conduit (26) connecting the master cylinder to the slave cylinder, characterised in that a connector (32) is provided through which hydraulic fluid can pass, the connector being of a leakproof quick-connect type and comprising a pair of half-connector members (44, 46; 404, 402; 500, 502) each including valve arrangements (92, 94 and 134, 138; 438, 448 and 416, 424; 532, 536 and 556, 568) which valve arrangements are both closed when the half-connector members are uncoupled and are both open when the half connectors are coupled to enable the cylinders (18, 26) to be interconnected through the conduit (26), the cylinders (18, 28) and conduit (26) being filled with hydraulic fluid by a method according to Claim 1 or any of Claims 3 to 11 when appendant to Claim 1.

13. Apparatus according to Claim 12 characterised in that the half-connector members (44, 46; 404, 402; 500, 502) are provided with one way locking means (122, 154; 466, 464; 572, 571) which inhibits disconnection of said half-connector members after the half-connector members have been interconnected.

14. Apparatus according to Claim 13 characterised in that the one way locking means includes a ring-like member (572, 571) on one member (502) having sprag elements (573) formed thereon and which are bent so as to engage a surface portion (572) on the other member (500).

15. Apparatus according to Claim 13 or 14 characterised in that a tool (202) is provided for disengaging the interlocking means (122, 154; 466, 464; 572, 571) to enable the half-connector members (44, 46; 404, 402; 500, 502) to be disconnected.

16. Apparatus according to claim 15 characterised in that the tool (220) includes tangs or the like (228) which are engageable with an element (154; 464; 571) of said interlocking means.

17. Apparatus according to claim 16 characterised in that one of the half-connector members (44) is formed with apertures (222) through which said tangs or the like (228) can pass to engage the element (154; 464; 571) of said interlocking means.

18. Apparatus according to Claim 16 or 17 characterised in that said tangs or the like (228) are mounted on a support (224) so as to extend radially inwardly for location in said apertures (222).

19. Apparatus according to Claim 18 characterised in that the support (224) is provided with handles (226) which can be manipulated to cause the tangs or the like (228) when located in the apertures (222) to release the said element (154; 464; 571) of said interlocking means to enable the connector members (44, 46; 404, 402; 500, 502) to be disconnected.

20. Apparatus according to any of Claims 12 to 19 characterised in that the slave cylinder (18) is integral with a bell housing (14) of a friction clutch assembly (11) and a passageway (904) is defined in the bell housing which permits communication of fluid between the slave cylinder (18) and the conduit (26).

21. Apparatus according to any of Claims 12 to 19 characterised in that the slave cylinder includes two tubular portions (901, 903) one of which is integral with a bell housing of a friction clutch assembly (11) and the other of which is attachable to the bell housing.

22. Apparatus according to Claim 21 characterised in that a passageway (904) is provided in the bell housing (14) which permits communication between the slave cylinder (18) and the conduit (26).

23. Apparatus according to Claim 21 characterised in that a passageway (904) is provided in the other part (901) attachable to the bell housing which permits communication between the slave cylinder (18) and the conduit (26).

24. Apparatus according to any of Claims 12 to 19 characterised in that the slave cylinder (18) extends from a transmission casing (15) into a bell housing (14) of a friction clutch assembly (11).

25. Apparatus according to Claim 24 characterised in that the slave cylinder (18) includes two integral tubular portions (901, 903).

26. Apparatus according to Claim 24 characterised in that the slave cylinder (18) includes two non-integral tubular portions (901, 903) one of which is formed with a passageway (904) which permits communication between the slave cylinder (18) and the conduit (26).

**Patentansprüche**

1. Verfahren zum Vorbefüllen eines hydraulischen Steuerapparats vor dem Einbau des Apparats in ein Fahrzeug oder eine Maschine, wobei der Apparat, wenn er eingebaut ist, einen hydraulischen Steuerzylinder (28), einen entfernten hydraulischen Folgezylinder (18) und eine den Steuerzylinder mit dem Folgezylinder verbindende Leitung (26) umfaßt, dadurch gekennzeichnet, daß ein Verbindungsstück (32) vorgesehen wird, durch welches Hydraulikflüssigkeit hindurchtreten kann, wobei das Verbindungsstück zum Typ der lecksicheren Schnellkupplungen gehört und zwei Verbindungsstückhälften (44, 46; 404, 402; 500, 502) umfaßt, von denen jede Ventileinrichtungen (92, 94 und 134, 138; 438, 448 und 416, 424, 523, 536 und 556, 568) aufweist, die beide geschlossen sind, wenn die Verbindungsstückhälften voneinander getrennt sind, und die beide offen sind, wenn die Verbindungsstückhälften miteinander verbunden sind, um die Zylinder (18, 26) über die Leitung (26) miteinander verbinden zu können, und die Zylinder und die Leitung mit Hydraulikflüssigkeit vor dem Einbau in das Fahrzeug oder die Maschine befüllt werden, um getrennte modulare Einheiten zu schaffen, die mit Hydraulikflüssigkeit für den Einbau in das Fahrzeug oder die Maschine vorgefüllt sind, wobei die Verbindungsstückhälften voneinander getrennt sind, wodurch die eingebauten modularen Einheiten anschließend durch Zusammenkuppeln der Verbindungsstückhälften des Verbindungsstücks (32) miteinander verbunden werden können, um den hydraulischen Steuerapparat zu bilden.

2. Verfahren zum Einbauen eines hydraulischen Steuerapparats in ein Fahrzeug oder eine Maschine, wobei der Apparat, wenn er eingebaut ist, einen hydraulischen Steuerzylinder (28), einen entfernten hydraulischen Folgezylinder (18) und eine den Steuerzylinder mit dem Folgezylinder verbindende Leitung (26) umfaßt, dadurch gekennzeichnet, daß ein Verbindungsstück (32) vorgesehen wird, durch welches Hydraulikflüssigkeit hindurchtreten kann, wobei das Verbindungsstück zum Typ der lecksicheren Schnellkupplungen gehört und zwei Verbindungsstückhälften (44, 46; 404, 402; 500, 502) umfaßt, von denen Ventileinrichtungen (92, 94 und 134, 138; 438, 448 und 416, 424; 532, 536 und 556, 568) aufweist, die beide geschlossen sind, wenn die Verbindungsstückhälften voneinander getrennt sind, und die beide offen sind, wenn die Verbindungsstückhälften miteinander verbunden sind, um die Zylinder (18, 26) über die Leitung (26) miteinander verbinden zu können, und die Zylinder und die Leitung mit Hydraulikflüssigkeit vor dem Einbau in das Fahrzeug befüllt werden, um getrennte modulare Einheiten zu schaffen, die mit der Hydraulikflüssigkeit vorgefüllt sind, die getrennten modularen Einheiten in das Fahrzeug oder die Maschine eingebaut werden, wobei die Verbindungsstückhälften des Verbindungsstücks (32) voneinander getrennt sind und die eingebauten modularen Einheiten durch Zusammenkuppeln der Verbindungsstückhälften des Verbindungsstücks (32) miteinander verbunden werden, um den hydraulischen Steuerapparat zu bilden.

3. Verfahren nach Anspruch 1 oder 2, dadurch gekennzeichnet, daß eine der Verbindungsstückhälften (44) an dem Steuerzylinder und die andere der Verbindungsstückhälften (46) an einem Ende der Leitung (26) befestigt werden, wobei das andere Ende der Leitung mit dem Folgezylinder (18) verbunden ist.

4. Verfahren nach Anspruch 1 oder 2, dadurch gekennzeichnet, daß eine der Verbindungsstückhälften (44, 404) an dem Folgezylinder und die andere der Verbindungsstückhälften (46; 402) an einem Ende der Leitung (26) befestigt werden, wobei das andere Ende der Leitung mit dem Steuerzylinder (28) verbunden ist.

5. Verfahren nach Anspruch 1 oder 2, dadurch gekennzeichnet, daß das Verbindungsstück (32) in irgendeiner Zwischenlage zwischen den Enden der Leitung (26) angeordnet wird, wobei die jeweiligen Enden der Leitung, die von dem Verbindungsstück entfernt sind, mit dem Steuerzylinder (28) und dem Folgezylinder (18) verbunden sind.

6. Verfahren nach Anspruch 1 oder 2, dadurch gekennzeichnet, daß eine der Verbindungsstückhälften (46) von einem Verbindungsstück (32) an einem Ende der Leitung (26) und die andere seiner Verbindungsstückhälften (44) an dem Steuerzylinder (28) befestigt werden und eine der Verbindungsstückhälften (46) eines weiteren Verbindungsstücks (32) an dem anderen Ende der Leitung (26) und die andere seiner Verbindungsstückhälften (44) an dem Folgezylinder (18) befestigt werden.

7. Verfahren nach irgendeinem vorhergehenden Anspruch, dadurch gekennzeichnet, daß die Verbindungsstückhälften (44, 46; 404, 402; 500, 502) vorübergehend miteinander verbunden werden, die Zylinder (18, 28) und die Leitung (26) mit Hydraulikflüssigkeit befüllt werden und anschließend die Verbindungsstückhälften voneinander getrennt werden.

8. Verfahren nach einem der Ansprüche 1 bis 4, dadurch gekennzeichnet, daß einer der Zylinder (18) mit Hydraulikflüssigkeit durch die Verbindungsstückhälfte (44) an ihm befüllt wird, um eine gefüllte modulare einheit zu bilden, und der andere Zylinder (28) und die Leitung (26) durch die andere Verbundungsstückhälfte (46) an einem Ende der Leitung (26) befüllt werden, wobei das andere Ende der Leitung (26) mit dem anderen Zylinder (28) verbunden ist, um eine zweite gefüllte modulare Einheit zu bilden.

9. Verfahren nach Anspruch 1, 2 oder 5, dadurch gekennzeichnet, daß der Steuerzylinder (28) und ein Teil der mit ihm verbundenen Leitung (26) durch die Verbindungsstückhälfte (44) an dem Leitungsteil mit Hydraulikflüssigkeit befüllt werden und der Folgezylinder (18) und ein Teil der mit ihm verbundenen Leitung (26) durch die Verbindungsstückhälfte (46) an diesem Leitungsteil mit Hydraulikflüssigkeit befüllt werden, um zwei gefüllte modulare Einheiten zu bilden.

10. Verfahren nach Anspruch 1, 2 oder 6, dadurch gekennzeichnet, daß die Leitung (26) durch eine Verbindungsstückhälfte (46) der Verbindungsstücke an ihr befüllt wird, um eine gefüllte modulare Einheit zu bilden, und der jeweilige Steuer- und Folgezylinder (28, 18) durch die andere Verbindungsstückhälfte (44) der Verbindungsstücke an ihnen befüllt werden, um zwei weitere gefüllte modulare Einheiten zu bilden.

11. Verfahren nach irgendeinem vorhergehenden Anspruch, dadurch gekennzeichnet, daß Umgebungsluft aus dem Apparat oder den modularen Einheiten abgesaugt wird, bevor der Apparat oder die modularen Einheiten mit einer hydraulischen Flüssigkeitsquelle zum Befüllen verbunden wird bzw. werden.

12. Hydraulischer Steuerapparat zum Einbau in ein Fahrzeug oder eine Maschine, wobei der Apparat, wenn er eingebaut ist, einen hydraulischen Steuerzylinder (28), einen entfernten hydraulischen Folgezylinder (18) und eine den Steuerzylinder mit dem Folgezylinder verbindende Leitung (26) umfaßt, dadurch gekennzeichnet, daß ein Verbindungsstück (32) vorgesehen ist, durch das Hydraulikflüssigkeit hindurchtreten kann, wobei das Verbindungsstück zum Typ der lecksicheren Schnellkupplungen gehört und zwei Verbindungsstückhälften (44, 46; 404, 402; 500, 502) aufweist, von denen jede Ventileinrichtungen (92, 94 und 134, 138; 438, 448 und 416, 424; 532, 536 und 556, 568) aufweist, die beide geschlossen sind, wenn die Verbindungsstückhälften voneinander getrennt sind, und die beide offen sind, wenn die Verbindungsstückhälften miteinander verbunden sind, um die Zylinder (18, 26) über die Leitung (26) miteinander verbinden zu können, wobei die Zylinder (18, 28) und die Leitung (26) mit Hydraulikflüssigkeit nach einem Verfahren gemäß Anspruch 1 oder irgendeinem der Ansprüche 3 bis 11, wenn rückbezogen auf Anspruch 1, befüllt sind.

13. Apparat nach Anspruch 12, dadurch gekennzeichnet, daß die Verbindungsstückhälften (44, 46; 404, 402; 500, 502) mit einer Einwegsperreinrichtung (122, 154; 466, 464; 572, 571) versehen sind, welche eine Trennung der Verbindungsstückhälften, nachdem die Verbindungsstückhälften miteinander verbunden wurden, unterbindet.

14. Apparat nach Anspruch 13, dadurch gekennzeichnet, daß die Einwegsperreinrichtung ein ringähnliches Teil (572, 571) an einer Hälfte (502) aufweist, das Spreizelemente (573) aufweist, die an ihm geformt und so gebogen sind, daß sie an einem Oberflächenabschnitt (572) an der anderen Hälfte (500) angreifen.

15. Apparat nach Anspruch 13 oder 14, dadurch gekennzeichnet, daß ein Werkzeug (202) zum Lösen der Sperreinrichtung (122, 154; 466, 464; 572, 571) vorgesehen ist, um die Verbindungsstückhälften (44, 46; 404, 402; 500, 502) voneinander trennen zu können.

16. Apparat nach Anspruch 15, dadurch gekennzeichnet, daß das Werkzeug (220) Dorne oder dergleichen (228) aufweist, die mit einem Element (154; 464; 571) der Sperreinrichtung in Eingriff bringbar sind.

17. Apparat nach Anspruch 16, dadurch gekennzeichnet, daß eine der Verbindungsstückhälften (44) mit Öffnungen (222) ausgebildet ist, durch welche die Dorne oder dergleichen (228) hindurchgehen können, um an dem Element (154; 464; 571) der Sperreinrichtung anzugreifen.

18. Apparat nach Anspruch 16 oder 17, dadurch gekennzeichnet, daß die Dorne oder dergleichen (228) an einem Träger (224) montiert sind, so daß sie radial einwärts zur Anordnung in den Öffnungen (222) verlaufen.

19. Apparat nach Anspruch 18, dadurch gekennzeichnet, daß der Träger (224) mit Handhaben (226) versehen ist, die so betätigt werden können, daß die Dorne oder dergleichen (228), wenn sie in den Öffnungen (222) angeordnet sind, das Element (154; 464; 571) der Sperreinrichtung lösen, um die Verbindungsstückhälften (44, 46; 404, 402; 500, 502) voneinander trennen zu können.

20. Apparat nach einem der Ansprüche 12 bis 19, dadurch gekennzeichnet, daß der Folgezylinder (18) einstückig mit einem Glockengehäuse (14) einer Reibungskupplung (11) ausgebildet ist und ein Durchgang (904) in dem Glockengehäuse ausgebildet ist, der eine Flüssigkeitsverbindung zwischen dem Folgezylinder (18) und der Leitung (26) gestattet.

21. Apparat nach einem der Ansprüche 12 bis 19, dadurch gekennzeichnet, daß der Folgezylinder zwei rohrförmige Abschnitte (901, 903) aufweist, von denen der eine einstückig mit einem Glockengehäuse einer Reibungskupplung (11) ausgebildet ist und der andere an dem Glockengehäuse befestigbar ist.

22. Apparat nach Anspruch 21, dadurch gekennzeichnet, daß ein Durchgang (904) in dem Glockengehäuse (14) vorgesehen ist, der eine Verbindung zwischen dem Folgezylinder (18) und der Leitung (26) gestattet.

23. Apparat nach Anspruch 21, dadurch gekennzeichnet, daß ein Durchgang (904) in dem anderen Teil (901) vorgesehen ist, der an dem Glockengehäuse befestigbar ist, wobei der Durchgang eine Verbindung zwischen dem Folgezylinder (18) und der Leitung (26) gestattet.

24. Apparat nach einem der Ansprüche 12 bis 19, dadurch gekennzeichnet, daß sich der Folgezylinder (18) von einem Getriebegehäuse (15) aus in ein Glockengehäuse (14) einer Reibungskupplung (11) erstreckt.

25. Apparat nach Anspruch 24, dadurch gekennzeichnet, daß der Folgezylinder (18) zwei einstückig miteinander ausgebildete rohrförmige Abschnitte (901, 903) aufweist.

26. Apparat nach Anspruch 24, dadurch gekennzeichnet, daß der Folgezylinder (18) zwei nicht einstückig miteinander ausgebildete rohrförmige Abschnitte (901, 903) aufweist, von denen der eine mit einem Durchgang (904) ausgebildet ist, der eine Verbindung zwischen dem Folgezylinder (18) und der Leitung (26) gestattet.

**Revendications**

1. Procédé de remplissage préalable d'un appareil hydraulique de commande avant l'installation de l'appareil sur un véhicule ou une machine, l'appareil, lorsqu'il est monté, comprenant un maître-cylindre hydraulique (28), un vérin hydraulique d'asservissement (18) placé à distance et un conduit (26) reliant le maître-cylindre au vérin d'asservissement, caractérisé par la disposition d'un raccord (32) par lequel le fluide hydraulique peut circuler, le raccord étant d'un type rapide étanche et comprenant deux demi-raccords (44, 46; 404, 402; 500, 502) comprenant chacun un dispositif d'obturation (92, 94 et 134, 138; 438, 448 et 416, 424; 532, 536 et 556, 568), les dispositifs d'obturation étant tous deux fermés lorsque les demi-raccords sont désaccouplés et étant tous deux ouverts lorsque les demi-raccords sont accouplés afin que le maître-cylindre et le vérin (18, 26) puissent être interconnectés par le conduit (26), et par le remplissage du maître-cylindre et du vérin et du conduit par un fluide hydraulique avant installation sur le véhicule ou la machine afin que des ensembles modulaires séparés, préalablement remplis du fluid hydraulique et destinés à être montés sur le véhicule ou la machine, soient formés avec les demi-connecteurs désaccouplés, si bien que les ensembles modulaires installés peuvent ensuite être raccordés par accouplement des demi-raccords du raccord (32) avec formation de l'appareil hydraulique de commande.

2. Procédé de montage d'un appareil hydraulique de commande sur un véhicule ou une machine, l'appareil, lorsquil est monté, comprenant un maître-cylindre hydraulique (28), un vérin hydraulique d'asservissement (18) placé à distance, et un conduit (26) reliant le maître-cylindre au vérin d'asservissement, caractérisé par la disposition d'un raccord (32) destiné à la circulation du fluide hydraulique, le raccord étant de type rapide étanche et comprenant deux demi-raccords (44, 46; 404, 402; 500, 502) comprenant chacun un dispositif d'obturation (92, 94 et 134, 138; 438, 448 et 416, 424; 532, 536 et 556, 568), les dispositifs d'obturation étant tous deux fermés lorsque les demi-raccords sont désaccouplés et étant tous deux ouverts lorsque les demi-raccords sont accouplés afin que le maître-cylindre et le vérin (18, 26) puissent être'interconnectés par le conduit (26), et par le remplissage du maître-cylindre, du vérin et du conduit par un fluide hydraulique avant montage sur le véhicule afin que des ensembles modulaires séparés préalablement remplis de fluide hydraulique soient formés, par l'installation des ensembles modulaires séparés sur le véhiculé ou la machine, les demi-raccords du raccord (32) étant désaccouplés, et par la connexion des ensembles modulaires montés par accouplement des demi-raccords du raccord (32) afin que l'appareil hydraulique de commande soit formé.

3. Procédé selon la revendication 1 ou 2, caractérisé par le montage de l'un des demi-raccords (44) sur le maître-cylindre et de l'autre des demi-raccords (46) à une première extrémité du conduit (26), l'autre extrémité du conduit étant raccordée au vérin d'asservissement (18).

4. Procédé selon la revendication 1 ou 2, caractérisé par le montage de l'un des demi-raccords (44, 404) sur le vérin d'asservissement et de l'autre des demi-raccords (46; 402) à la première extrémité du conduit (26), l'autre extrémité du conduit étant connectée au maître-cylindre (28).

5. Procédé selon la revendication 1 ou 2, caractérisé par la disposition du raccord (32) à un emplacement intermédiaire entre les extrémités du conduit (26), les extrémités respectives du conduit distantes du raccord étant connectées au maître-cylindre (28) et au vérin d'asservissement (18).

6. Procédé selon la revendication 1 ou 2, caractérisé par le montage de l'un des demi-raccords (46) d'un premier raccord (32) à une première extrémité du conduit (26) et de l'autre demi-raccord (44) sur le maître-cylindre (28), et par le montage de l'un des demi-raccords (46) d'un autre raccord (32) à l'autre extrémité du conduit (26) et de l'autre demi-raccord (44) sur le vérin d'asservissement (18).

7. Procédé selon l'une quelconque des revendications précédentes, caractérisé par la connexion temporaire des demi-raccords (44, 46; 404, 402; 500, 502), le remplissage du maître-cylindre, du vérin (18, 28) et du conduit (26) par le fluide hydraulique, puis la déconnexion des demi--raccords.

8. Procédé selon l'une quelconque des revendications 1 à 4, caractérisé par le remplissage du maître-cylindre (18) ou du vérin par le fluide hydraulique par l'intermédiaire du demi-raccord (44) qu'il porte afin qu'il forme un ensemble modulaire rempli, et le remplissage du vérin (28) ou du maître-cylindre et du conduit (26) par l'autre demi-raccord (46) à la première extrémité du conduit (26), l'autre extrémité du conduit (26) étant connectée au maître-cylindre (28) ou au vérin afin qu'un second ensemble modulaire rempli soit formé.

9. Procédé selon la revendication 1, 2 ou 5, caractérisé par le remplissage par du fluide hydraulique du maître-cylindre (28) et d'une partie du conduit (26) qui lui est connectée par le demi-raccord (44) placé sur la partie de conduit, et le remplissage, par du fluide hydraulique, du vérin d'asservissement (18) et d'une partie de conduit (26) qui lui est connectée par le demi-raccord (46) de cette partie de conduit afin que deux ensembles modulaires remplis soient formés.

10. Procédé selon la revendication 1, 2 ou 6, caractérisé par le remplissage du conduit (26) par le premier demi-raccord (46) des raccords qu'il porte afin qu'un ensemble modulaire rempli soit formé, et le remplissage du maître-cylindre ou du vérin respectif (28, 18) par l'intermédiaire des autres demi-raccords (44) des raccords afin que deux ensembles modulaires remplis supplémentaires soient formés.

11. Procédé selon l'une quelconque des revendications précédentes, caractérisé par l'évacuation de l'air atmosphérique de l'appareil ou des ensembles modulaires avant la connexion de l'appareil ou des ensembles modulaires à une source de fluide hydraulique destinée à leur remplissage.

12. Appareil hydraulique de commande destiné à être monté sur un véhicule ou une machine, l'appareil, lorsqu'il est monté, comprenant un maître-cylindre hydraulique (28), un vérin hydraulique d'asservissement (18) placé à distance et un conduit (26) reliant le maître-cylindre au vérin, caractérisé en ce qu'un raccord (32) est disposé pour la circulation du fluide hydraulique, le raccord étant d'un type rapide étanche et comprenant deux demi-raccords (44, 46; 404, 402; 500, 502) comprenant chacun un dispositif d'obturation (92, 94 et 134, 138; 438, 448 et 416, 424; 532, 536 et 556, 568), les dispositifs d'obturation étant tous deux fermés lorsque les demi-raccords sont désaccouplés et étant tous deux ouverts lorsque les demi-raccords sont accouplés afin que le maître-cylindre et le vérin (18, 26) puissent être connectés par le conduit (26), le maître-cylindre, le vérin (18, 28) et le conduit (26) étant remplis de fluide hydraulique par mise en oeuvre d'un procédé selon la revendication 1 ou l'une quelconque des revendications 3 à 11 Lorsqu'elle dépend de la revendication 1.

13. Appareil selon la revendication 12, caractérisé en ce que les demi-raccords (44, 46; 404, 402; 500, 502) comportent un dispositf de blocage unidirectionnel (122, 154; 466, 464; 572, 571) qui empêche la déconnexion des demi-raccords après que les demi-raccords ont été accouplés.

14. Appareil selon la revendication 13, caractérisé en ce que le dispositif de blocage unidirectionnel comporte un organe de forme annulaire (572, 571) formeé sur l'un des organes (502) et ayant des éléments en forme de harpon (573) qui sont repliés afin qu'ils coopèrent avec une partie de surface (572) formée sur l'autre organe (500).

15. Appareil selon la revendication 13 ou 14, caractérisé en ce qu'un outil (202) est destiné à séparer le dispositif d'emboîtement (122, 154; 466, 464; 572, 571) afin que les demi-raccords (44, 46; 404, 402; 500, 502) puissent être désaccouplés.

16. Appareil selon la revendication 15, caractérisé en ce que l'outil (220) comporte des pattes ou analogues (228) qui sont destinées à coopérer avec un élément (154; 464; 571) du dispositif d'emboîtement.

17. Appareil selon la revendication 16, caractérisé en ce que l'un des demi-raccords (44) a des ouvertures (222) destinées au passage des pattes ou analogues (228) afin qu'elles viennent au contact de l'élément (154; 464; 571) du dispositif d'emboîtement.

18. Appareil selon la revendication 16 ou 17, caractérisé en ce que les pattes ou analogues (228) sont montées sur un support (224) afin qu'elles dépassent radialement vers l'intérieur et puissent pénétrer dans les ouvertures (222).

19. Appareil selon la revendication 18, caractérisé en ce que le support (224) a des poignées (226) qui peuvent être manipulées de manière que les pattes ou analogues (228), lorsqu'elles sont placées dans les ouvertures (222), libèrent ledit élément (154; 464; 571) du dispisitif d'emboîtement et permettent la sépartion des organes du raccord (44, 46; 404, 402; 500, 502).

20. Appareil selon l'une quelconque des revendications 12 à 19, caractérisé en ce que le vérin d'asservissement (18) est formé en une seule pièce avec un boîtier (14) en forme d'un cloche d'un embrayage à friction 111) et un passage (904) est délimité dans le boîtier en forme de cloche afin qu'il permette la circulation du fluide entre le vérin d'asservissement (18) et le conduit (26).

21. Appareil selon l'une quelconque des revendications 12 à 19, caractérisé en ce que le vérin d'asservissement comporte deux parties tubulaires (901, 903) dont l'une est solidaire d'un boîtier en forme de cloche d'un embrayage à friction (11) et dont l'autre est destinée à être fixée au boîtier en forme de cloche.

22. Appareil selon la revendication 21, caractérisé en ce qu'un passage (904) est formé dans le boîtier en forme de cloche (14) et permet la communication entre le vérin d'asservissement (18) et le conduit (26).

23. Appareil selon la revendication 21, caractérisé en ce qu'un passage (904) est formé dans l'autre partie (901) destinée à être fixée au boîtier en forme de cloche et permet la communication entre le vérin d'asservissement (18) et le conduit (26).

24. Appareil selon l'une quelconque des revendications 12 à 19, caractérisé en ce que le vérin d'asservissement (18) dépasse d'un carter de transmission (15) dans un boîtier en forme de cloche (14) d'un embrayage à friction (11).

25. Appareil selon la revendication 24, caractérisé en ce que le vérin d'asservissement (18) comporte deux parties tubulaires en une seule pièce (901, 903).

26. Appareil selon la revendication 24, caractérisé en ce que le vérin d'asservissement (18) comporte deux parties tubulaires (901, 903) qui ne sont pas formées en une seule pièce, l'une d'elles ayant un passage (904) qui permet la communication entre le vérin d'asservissement (18) et le conduit (26).

FIG.1

FIG.2

FIG.3

FIG.4

FIG. 5.

FIG. 6.

FIG. 7.

FIG. 8.

EP 0 146 283 B1

FIG. 9.

FIG. 10.

FIG. 11.

FIG. 12.

FIG. 13.

5

FIG. 16.

FIG.15.

FIG. 14.

FIG.17.

FIG.18.

FIG.19

FIG.20

FIG.21

FIG.22.

FIG.23

FIG.24

FIG.25

FIG.26

FIG.27